# EUROPEAN PATENT APPLICATION

(11) **EP 4 841 324 A1**
(43) Date of publication of application: **18.11.2026**
(21) Application number: 25752413.2
(22) Date of filing: 16.01.2025
(51) Int. Cl.: G02B 9/64, H04N 23/55, G02B 13/00, G02B 1/04, G02B 3/02, G03B 9/02, G02B 13/18, G02B 3/00

(54) **IMAGING DEVICE AND ELECTRONIC DEVICE COMPRISING SAME**

(30) Priority: 05.02.2024 KR 20240017672; 14.02.2024 KR 20240020946
(71) Applicant: Samsung Electronics Co., Ltd., Suwon-si, Gyeonggi-do 16677 (KR)
(72) Inventor: LEE, Hwanseon, Suwon-si Gyeonggi-do 16677 (KR); SHIN, Jeongkil, Suwon-si Gyeonggi-do 16677 (KR)
(74) Representative: HGF
(86) International application number: PCT/KR2025/000940
(87) International publication number: WO 2025/170235

(57) **Abstract**

According to an embodiment of the present disclosure, an imaging device and/or an electronic device including same may comprise: an image sensor; and a lens assembly which includes at least seven lenses aligned along the optical axis and is configured to focus or guide light incident from the outside of the imaging device, to the image sensor. In an embodiment, the at least seven lenses may include: a first lens disposed farthest from the image sensor and having negative refractive power; a second lens disposed between the first lens and the image sensor and having positive refractive power; a third lens disposed between the second lens and the image sensor and having positive refractive power or negative refractive power; a fourth lens disposed between the third lens and the image sensor and having negative refractive power; a fifth lens disposed between the fourth lens and the image sensor and having positive refractive power or negative refractive power; a sixth lens disposed between the fifth lens and the image sensor and having positive refractive power; and a seventh lens disposed between the sixth lens and the image sensor and having negative refractive power. In an embodiment, the lens assembly may satisfy 1.5 < f1/f7 < 2.5, which is a conditional expression related to a focal length 'f1' of the first lens and a focal length 'f7' of the seventh lens. Other various embodiments may also be possible.

## Description

### [Technical Field]

Embodiment(s) of the disclosure relate to an image capturing device and, for example, to an image capturing device including a plurality of lenses and an electronic device including the same.

### [Background Art]

Optical devices, for example, cameras capable of capturing images or videos, have been widely used, and recently, digital cameras or video cameras having solid-state image sensors such as a charge coupled device (CCD) or a complementary metal-oxide semiconductor (CMOS) have become common. An optical device employing a solid-state image sensor (CCD or CMOS) is gradually replacing a film-type optical device because it is easier to store, duplicate, and move images compared to the film-type optical device.

Recently, two or more selected from a plurality of optical devices, for example, a macro camera, a telephoto camera, and/or a wide-angle camera are mounted on a single electronic device to improve the quality of a captured image and provide various visual effects to the captured image. For example, a high-quality captured image may be obtained by obtaining subject images through a plurality of cameras having different optical characteristics and synthesizing them. As high-quality captured images are obtained by mounting a plurality of optical devices (e.g., cameras), electronic devices such as mobile communication terminals or smartphones are gradually replacing electronic devices specialized for a photographing function, such as digital compact cameras, and are expected to be able to replace high-performance cameras such as digital single-lens reflex (DSLR) cameras in the future.

The above information is presented as related art only to assist with an understanding of the disclosure. No determination has been made, and no assertion is made, as to whether any of the above might be applicable as prior art with regard to the disclosure.

### [Detailed Description of the Invention]

### [Technical Solution]

According to an embodiment of the disclosure, an imaging device and/or an electronic device including the same may include an image sensor, and a lens assembly including at least seven lenses aligned along an optical axis and configured to focus or guide light incident from an outside of the imaging device to the image sensor. In an embodiment, the at least seven lenses may include a first lens disposed farthest from the image sensor and having a negative refractive power, a second lens disposed between the first lens and the image sensor and having a positive refractive power, a third lens disposed between the second lens and the image sensor and having a positive or negative refractive power, a fourth lens disposed between the third lens and the image sensor and having a negative refractive power, a fifth lens disposed between the fourth lens and the image sensor and having a positive or negative refractive power, a sixth lens disposed between the fifth lens and the image sensor and having a positive refractive power, and a seventh lens disposed between the sixth lens and the image sensor and having a negative refractive power. The lens assembly may satisfy [Conditional Expression 1; 1.5 < f1/f7 < 2.5] where 'f1' may be a focal length of the first lens, and 'f7' may be a focal length of the seventh lens.

According to an embodiment of the disclosure, an electronic device may include the above-described imaging device, at least one processor, and memory. In an embodiment, the memory may store instructions that, when executed by the at least one processor, cause the electronic device to acquire an object image using the imaging device.

According to an embodiment of the disclosure, an electronic device may include an imaging device, a processor, and memory storing instructions that, when executed by the at least one processor, cause the electronic device to acquire an object image using the imaging device. In an embodiment, the imaging device may include an image sensor, and a lens assembly including at least seven lenses aligned along an optical axis. The at least seven lenses may include at least one glass lens including an aspheric surface with a positive refractive power between a first lens farthest from the image sensor and an n^{th} lens closest to the image sensor. In an embodiment, the lens assembly may be configured to focus or guide light incident from an outside of the imaging device to the image sensor. In an embodiment, the lens assembly may satisfy [Conditional Expression 4; 1.5 < f1/fn < 2.5] where 'f1' may be a focal length of the first lens, and 'fn' may be a focal length of the n^{th} lens.

### [Brief Description of Drawings]

The above or other aspects, configurations, and/or advantages of an embodiment of the disclosure may become more apparent through the following detailed description with reference to the accompanying drawings.
FIG. 1 is a block diagram illustrating an electronic device in a network environment according to an embodiment of the disclosure.
FIG. 2 is a block diagram illustrating a camera module according to an embodiment of the disclosure.
FIG. 3 is a perspective view illustrating a front surface of an electronic device according to an embodiment of the disclosure.
FIG. 4 is a perspective view illustrating a rear surface of the electronic device illustrated in FIG. 3, according to an embodiment of the disclosure.
FIG. 5 is a diagram illustrating an image capturing device and/or a lens assembly according to an embodiment of the disclosure.
FIG. 6 is a graph illustrating spherical aberration of the lens assembly of FIG. 5 according to an embodiment of the disclosure.
FIG. 7 is a graph illustrating astigmatism of the lens assembly of FIG. 5 according to an embodiment of the disclosure.
FIG. 8 is a graph illustrating distortion of the lens assembly of FIG. 5 according to an embodiment of the disclosure.
FIG. 9 is a diagram illustrating an image capturing device and/or a lens assembly according to an embodiment of the disclosure.
FIG. 10 is a graph illustrating spherical aberration of the lens assembly of FIG. 9 according to an embodiment of the disclosure.
FIG. 11 is a graph illustrating astigmatism of the lens assembly of FIG. 9 according to an embodiment of the disclosure.
FIG. 12 is a graph illustrating distortion of the lens assembly of FIG. 9 according to an embodiment of the disclosure.
FIG. 13 is a diagram illustrating an image capturing device and/or a lens assembly according to an embodiment of the disclosure.
FIG. 14 is a graph illustrating spherical aberration of the lens assembly of FIG. 13 according to an embodiment of the disclosure.
FIG. 15 is a graph illustrating astigmatism of the lens assembly of FIG. 13 according to an embodiment of the disclosure.
FIG. 16 is a graph illustrating distortion of the lens assembly of FIG. 13 according to an embodiment of the disclosure.
FIG. 17 is a diagram illustrating an image capturing device and/or a lens assembly according to an embodiment of the disclosure.
FIG. 18 is a graph illustrating spherical aberration of the lens assembly of FIG. 17 according to an embodiment of the disclosure.
FIG. 19 is a graph illustrating astigmatism of the lens assembly of FIG. 17 according to an embodiment of the disclosure.
FIG. 20 is a graph illustrating distortion of the lens assembly of FIG. 17 according to an embodiment of the disclosure.
FIG. 21 is a diagram illustrating an image capturing device and/or a lens assembly according to an embodiment of the disclosure.
FIG. 22 is a graph illustrating spherical aberration of the lens assembly of FIG. 21 according to an embodiment of the disclosure.
FIG. 23 is a graph illustrating astigmatism of the lens assembly of FIG. 21 according to an embodiment of the disclosure.
FIG. 24 is a graph illustrating distortion of the lens assembly of FIG. 21 according to an embodiment of the disclosure.
FIG. 25 is a diagram illustrating an image capturing device and/or a lens assembly according to an embodiment of the disclosure.
FIG. 26 is a graph illustrating spherical aberration of the lens assembly of FIG. 25 according to an embodiment of the disclosure.
FIG. 27 is a graph illustrating astigmatism of the lens assembly of FIG. 25 according to an embodiment of the disclosure.
FIG. 28 is a graph illustrating distortion of the lens assembly of FIG. 25 according to an embodiment of the disclosure.
FIG. 29 is a diagram illustrating an image capturing device and/or a lens assembly according to an embodiment of the disclosure.
FIG. 30 is a graph illustrating spherical aberration of the lens assembly of FIG. 29 according to an embodiment of the disclosure.
FIG. 31 is a graph illustrating astigmatism of the lens assembly of FIG. 29 according to an embodiment of the disclosure.
FIG. 32 is a graph illustrating distortion of the lens assembly of FIG. 29 according to an embodiment of the disclosure.

Throughout the accompanying drawings, similar reference numerals may be assigned to similar parts, components, and/or structures.

### [Mode for Carrying out the Invention]

As electronic devices become increasingly miniaturized, the conditions for ensuring optical performance while mounting imaging devices such as cameras in these miniaturized devices are becoming progressively challenging. For example, while it may be easier to improve the optical performance of an imaging device as the number and size of lenses increase, there are limitations on the number and size of lenses when mounting them in miniaturized electronic devices. As user demands for more advanced optical performance increase, the adoption of high-performance image sensors with 50 million pixels or more is rising. However, along with the miniaturization of electronic devices, there may be difficulties in implementing a small-sized lens assembly matching to such a high-performance image sensor.

An embodiment of the disclosure is to address at least the above-mentioned problems and/or disadvantages and to provide at least the advantages described below, and may provide an imaging device having optical performance suitable for a high-pixel and/or large-sized image sensor, and/or an electronic device including the same.

An embodiment of the disclosure may provide an imaging device and/or an electronic device including the same, which has optical performance suitable for a high-pixel and/or large-sized image sensor and is capable of suppressing a performance deviation due to a temperature change.

The technical objects to be achieved by the disclosure are not limited to the technical objects mentioned above, and other technical objects not mentioned will be clearly understood by those skilled in the art from the following description.

The following description of the accompanying drawings may provide an understanding of various exemplary implementations of the disclosure, including the claims and equivalents thereof. Although an exemplary embodiment disclosed in the following description includes various specific details to aid understanding, these are considered to be merely one of various exemplary embodiments. Accordingly, those skilled in the art will understand that various changes and modifications may be made to various implementations described herein without departing from the scope and spirit of the disclosure. Additionally, a description of well-known functions and configurations will be avoided for clarity and conciseness.

The terms and words used in the following description and claims are not limited to their bibliographical meanings but may be used to clearly and consistently describe an embodiment of the disclosure. Therefore, it will be apparent to those skilled in the art that the following description of various implementations of the disclosure is provided for illustration purposes only and not for the purpose of limiting the disclosure as defined by the scope of the claims and their equivalents.

It should be understood that the singular forms "a," "an," and "the" include plural referents unless the context clearly dictates otherwise. Thus, for example, a reference to "a component surface" may be understood as including one or more surfaces of the component.

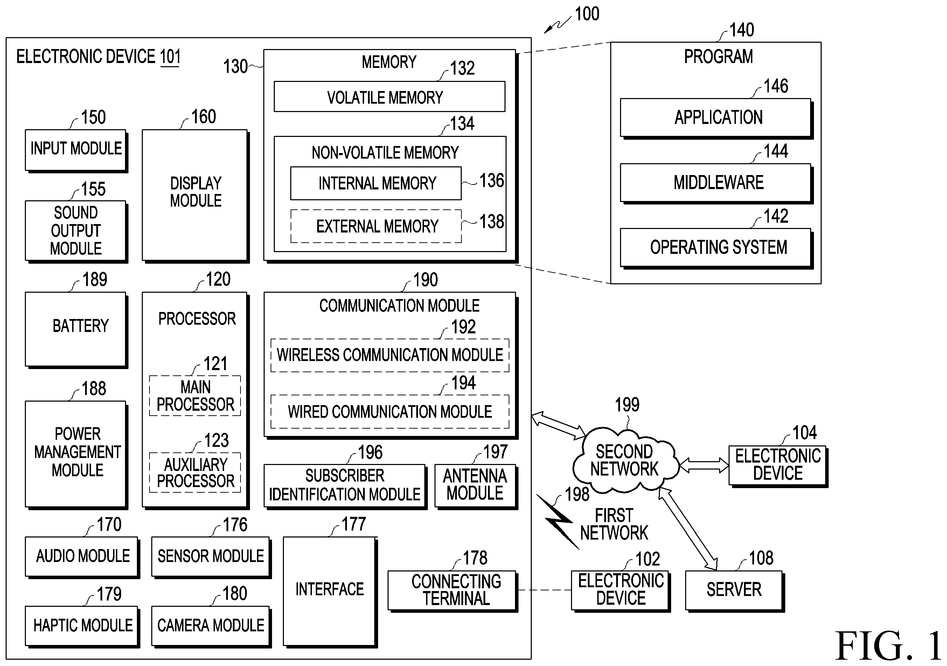

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one of the components (e.g., the connecting terminal 178) may be omitted from the electronic device 101, or one or more other components may be added in the electronic device 101. In an embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

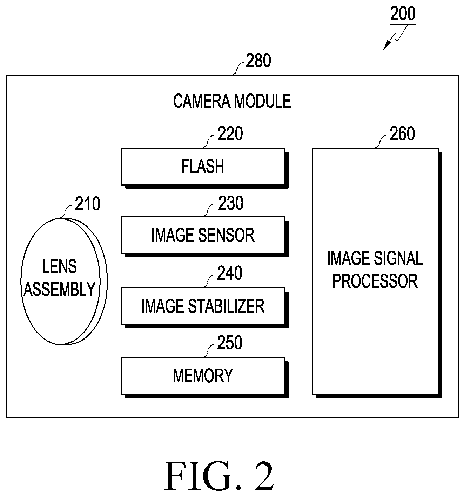

FIG. 2 is a block diagram 200 illustrating a camera module 280 (e.g., the camera module 180 in FIG. 1) according to an embodiment of the disclosure. Referring to FIG. 2, the camera module 280 may include a lens assembly 210, a flash 220, an image sensor 230, an image stabilizer 240, memory 250 (e.g., buffer memory), or an image signal processor 260. In an embodiment, the lens assembly 210 may include the image sensor 230. The lens assembly 210 may collect light emitted from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., view angle, focal length, auto-focusing, F-number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or an electronic device 201 including the camera module 280. This allows compensating for at least part of a negative effect by the movement on an image being captured. According to an embodiment, the image stabilizer 240 may sense such a movement by the camera module 280 or an electronic device (e.g., the electronic device 101 in FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of a memory (e.g., the memory 130 in FIG. 1) or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 in FIG. 1) outside the camera module 280. According to an embodiment, the image signal processor 260 may be configured as at least part of a processor (e.g., the processor 120 in FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, an electronic device (e.g., the electronic device 101 in FIG. 1) may include a plurality of camera modules 280 having different attributes or functions. In such a case, at least one of the plurality of camera modules 280 may form, for example, a wide-angle camera and at least another of the plurality of camera modules 280 may form a telephoto camera. Similarly, at least one of the plurality of camera modules 280 may form, for example, a front camera and at least another of the plurality of camera modules 280 may form a rear camera.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiment(s) of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

In the following detailed description, a longitudinal direction, width direction, and/or thickness direction of an electronic device may be mentioned. The longitudinal direction may be defined as a 'Y-axis direction', the width direction as an 'X-axis direction', and/or the thickness direction as a 'Z-axis direction'. In an embodiment, regarding a direction in which a component faces, 'negative/positive (-/+)' may be mentioned along with a Cartesian coordinate system illustrated in the drawings. For example, a front surface of the electronic device and/or a housing may be defined as a 'surface facing a +Z direction', and a rear surface thereof may be defined as a 'surface facing a -Z direction'. In an embodiment, a side surface of the electronic device and/or the housing may include a region facing a +X direction, a region facing a +Y direction, a region facing a -X direction, and/or a region facing a -Y direction. In an embodiment, the 'X-axis direction' may be meant to include both the '-X direction' and the '+X direction'. It should be noted that this is based on the Cartesian coordinate system described in the drawings for brevity of description, and the description of these directions or components does not limit the embodiment(s) of the disclosure. For example, the Cartesian coordinate system may be defined differently from the disclosure depending on the design specifications of the electronic device or a user's usage habits.

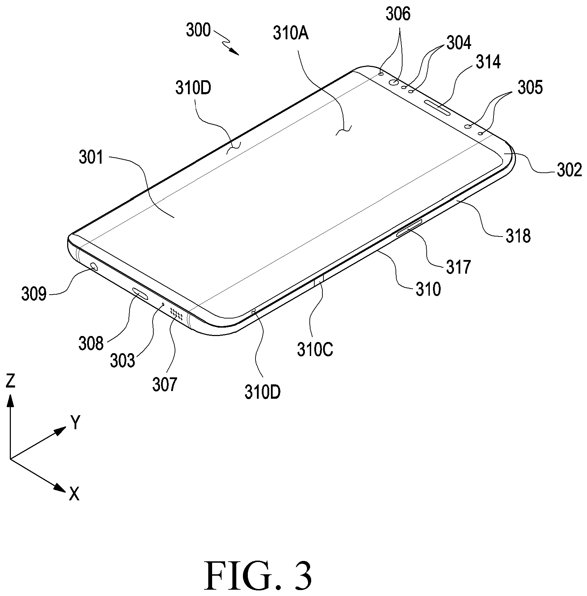

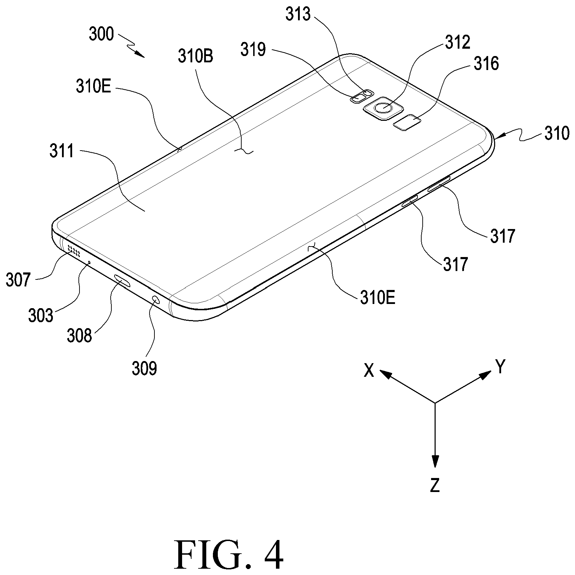

FIG. 3 is a perspective view illustrating a front surface of an electronic device 300 (e.g., the electronic device 101 of FIG. 1) according to an embodiment of the disclosure. FIG. 4 is a perspective view illustrating a rear surface of the electronic device 300 illustrated in FIG. 3 according to an embodiment of the disclosure.

Referring to FIGS. 3 and 4, the electronic device 300 (e.g., the electronic device 101 of FIG. 1) according to an embodiment may include a housing 310 which includes a first surface (front surface) 310A, a second surface (rear surface) 310B, and a side surface 310C surrounding a space between the first surface 310A and the second surface 310B. In an embodiment (not shown), the housing 310 may refer to a structure that forms a portion of the first surface 310A of FIG. 3, the second surface 310B of FIG. 4, and the side surfaces 310C. According to an embodiment, at least a portion of the first surface 310A may be formed by a front plate 302 (e.g., a glass plate or polymer plate including various coating layers) which is at least partially substantially transparent. In an embodiment, the front plate 302 may be coupled to the housing 310 to form an internal space together with the housing 310. In an embodiment, the term 'internal space' may refer to an internal space of the housing 310 for accommodating at least a portion of a display 301 to be described later or the display module 160 of FIG. 1.

According to an embodiment, the second surface 310B may be formed by a rear plate 311. The rear plate 311 may be formed of, for example, coated or tinted glass, ceramic, a polymer, a metal (e.g., aluminum, stainless steel (STS), or magnesium), or a combination of at least two of these materials. The side surface 310C may be coupled to the front plate 302 and the rear plate 311 and formed by a side bezel structure (or "side member") 318 including a metal and/or a polymer. In an embodiment, the rear plate 311 and the side bezel structure 318 may be integrally formed and include the same material (e.g., a metal material such as aluminum).

In the illustrated embodiment, the front plate 302 may include two first areas 310D, which are bent and extend seamlessly from the first surface 310A toward the rear plate 311, at both long edge ends of the front plate 302. In the illustrated embodiment (see FIG. 4), the rear plate 311 may include two second areas 310E, which are bent and extend seamlessly from the second surface 310B toward the front plate 302, at both long edge ends of the rear plate 311. In an embodiment, the front plate 302 (or the rear plate 311) may include only one of the first areas 310D (or the second areas 310E). In an embodiment, some of the first areas 310D or the second areas 310E may not be included. In the embodiments, when viewed from the sides of the electronic device 101, the side bezel structure 318 may have a first thickness (or width) on a side surface that does not include any of the above first areas 310D or second areas 310E (e.g., a side surface on which a connector hole 308 is formed), and a second thickness less than the first thickness on a side surface that includes the above first areas 310D or second areas 310E (e.g., a side surface on which a key input device 317 is disposed).

According to an embodiment, the electronic device 300 may include at least one of the display 301, audio modules 303, 307, sensor modules 304, 316, and 319, camera modules 305, 312, and 313 (e.g., the camera module 180 or 280 in FIG. 1 or FIG. 2), key input devices 317, or connector holes 308 and 309. In an embodiment, the electronic device 300 may not be provided with at least one (e.g., the key input devices 317 or a light emitting element 306) of the components or may additionally include other components.

The display 301 (e.g., the display module 160 of FIG. 1) may be visually exposed, for example, through a substantial portion of the front plate 302. In an embodiment, at least a portion of the display 301 may be exposed through the first surface 310A and the front plate 302 which forms the first areas 310D of the side surface 310C. In an embodiment, a corner of the display 301 may be formed substantially in the same shape as that of an adjacent periphery of the front plate 302. In an embodiment (not shown), a gap between the periphery of the display 301 and the periphery of the front plate 302 may be substantially equal to increase the visually exposed area of the display 301.

In an embodiment (not shown), a recess or an opening may be formed in a portion of the screen display area (e.g., active area) or an area (e.g., inactive area) outside the screen display area, and at least one of the audio module 314 (e.g., the audio module 170 of FIG. 1), the sensor module 304 (the sensor module 176 of FIG. 1), the camera module 305, or the light emitting element 306, which is aligned with the recess or the opening, may be included. In an embodiment (not shown), at least one of the audio module 314, the sensor module 304, the camera modules 305 (e.g., under display camera (UDC)), a fingerprint sensor 316, or the light emitting element 306 may be included on a rear surface of the screen display area of the display 301. In an embodiment (not shown), the display 301 may be incorporated with or disposed adjacent to a touch sensing circuit, a pressure sensor capable of measuring the intensity (pressure) of a touch, and/or a digitizer that detects a magnetic field-based stylus pen. In an embodiment, at least some of the sensor modules 304 and 319 and/or at least some of the key input devices 317 may be disposed in the first areas 310D and/or the second areas 310E.

The audio modules 303, 307, and 314 may include a microphone hole 303 and speaker holes 307 and 314. A microphone for obtaining an external sound may be disposed in the microphone hole 303, and in an embodiment, a plurality of microphones may be disposed to detect the direction of a sound. The speaker holes 307 and 314 may include an external speaker hole 307 and a receiver hole 314 for calls. In an embodiment, the speaker holes 307 and 314 and the microphone hole 303 may be implemented as a single hole, or a speaker (e.g., a piezo speaker) may be included without the speaker holes 307 and 314.

The sensor modules 304, 316, and 319 may generate an electrical signal or data value corresponding to an internal operating state or external environmental state of the electronic device 300. The sensor modules 304, 316, and 319 may include, for example, a first sensor module 304 (e.g., a proximity sensor) and/or a second sensor module (not shown) (e.g., a fingerprint sensor), disposed on the first surface 310A of the housing 310, and/or a third sensor module 319 (e.g., a HRM sensor) and/or a fourth sensor module 316 (e.g., a fingerprint sensor), disposed on the second surface 310B of the housing 310. The fingerprint sensors may be disposed on the second surface 310B as well as on the first surface 310A (e.g., the display 301) of the housing 310. The electronic device 300 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 305, 312, and 313 may include a front camera module 305 disposed on the first surface 310A of the electronic device 300, and a rear camera module 312 and/or a flash 313 disposed on the second surface 310B. The camera modules 305 and 312 may include one or more lenses, an image sensor, and/or an image signal processor. The flash 313 may include, for example, a light emitting diode (LED) or a xenon lamp. In an embodiment, two or more lenses (an IR camera, a wide-angle lens, and a telephoto lens) and image sensors may be arranged on one surface of the electronic device 300.

The key input devices 317 may be disposed on the side surface 310C of the housing 310. In an embodiment, the electronic device 300 may not include some or any of the key input devices 317, and the key input devices 317 which are not included may be implemented in other forms such as soft keys on the display 301. In an embodiment, the key input devices may include the sensor module 316 disposed on the second surface 310B of the housing 310.

The light emitting element 306 may be disposed, for example, on the first surface 310A of the housing 310. The light emitting element 306 may provide, for example, state information about the electronic device 300 in the form of light. In an embodiment, the light emitting element 306 may provide, for example, a light source interworking with an operation of the front camera module 305. The light emitting element 306 may include, for example, an LED, an IR LED, and a xenon lamp.

The connector holes 308 and 309 may include a first connector hole 308 capable of accommodating a connector (e.g., a USB connector) for transmitting and receiving power and/or data to and from an external electronic device and/or a second connector hole (e.g., an earphone jack) 309 capable of accommodating a connector for transmitting and receiving an audio signal to and from an external electronic device.

In describing the following embodiments, reference may be made to the electronic devices 101, 102, 104, and 300 and/or the camera modules 180, 280, 305, 312, and 313 of the above-described embodiments. Imaging devices 400, 500, 600, 700, 800, 900, and 1000 in embodiments described below may implement part or the entirety of at least one of the above-described camera modules 180, 280, 305, 312, and 313.

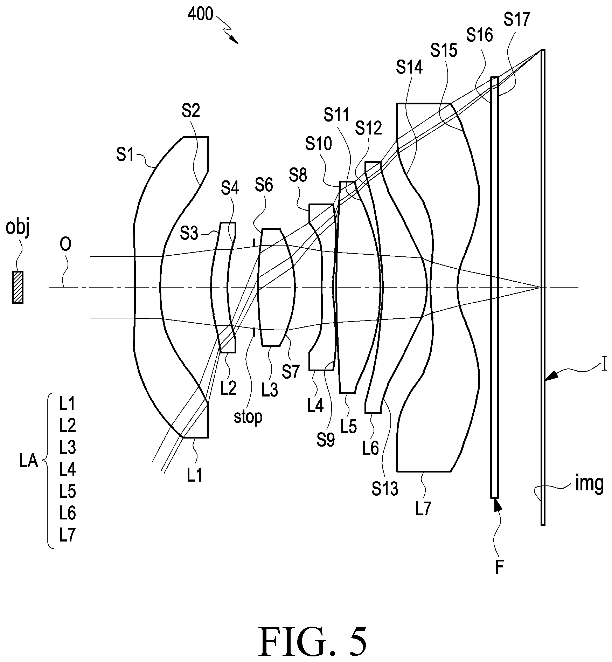

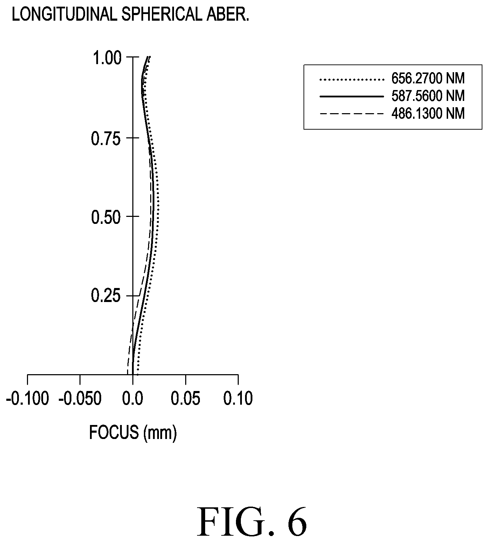

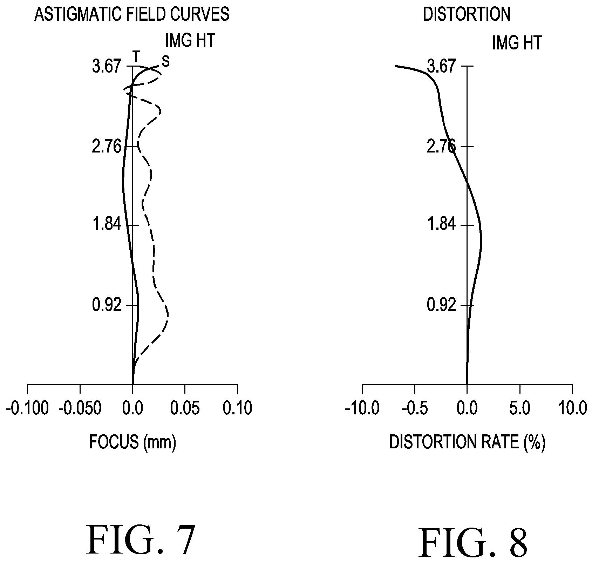

FIG. 5 is a diagram illustrating the imaging device 400 and/or a lens assembly LA according to an embodiment of the disclosure. FIG. 6 is a graph illustrating spherical aberration of the lens assembly LA of FIG. 5 according to an embodiment of the disclosure. FIG. 7 is a graph illustrating astigmatism of the lens assembly LA of FIG. 5 according to an embodiment of the disclosure. FIG. 8 is a graph illustrating distortion of the lens assembly LA of FIG. 5 according to an embodiment of the disclosure.

FIG. 6 is a graph illustrating the spherical aberration of the imaging device 400 and/or the lens assembly LA according to an embodiment of the disclosure, in which a horizontal axis represents coefficients of longitudinal spherical aberration, a vertical axis represents normalized distances from an optical axis, and variations of the longitudinal spherical aberration according to light wavelengths are illustrated. The longitudinal spherical aberration is shown, for example, for each of light with a wavelength of 656.2700 nanometers (NM), light with a wavelength of 587.5600NM, and light with a wavelength of 486.1300NM. FIG. 7 is a graph illustrating the astigmatism of the imaging device 400 and/or the lens assembly LA according to an embodiment of the disclosure, for light with the wavelength of 587.5600NM, in which 'S' represents a sagittal plane with a solid line, and 'T' represents a tangential plane (or meridional plane) with a dotted line. FIG. 8 is a graph illustrating the distortion of the imaging device 400 and/or the lens assembly LA according to an embodiment of the disclosure, for light with the wavelength of 587.5600NM. The refractive index of lens(es) mentioned in embodiments described below may refer to the refractive index for light with a wavelength of approximately 587.5600nm.

Referring to FIGS. 5 to 8, the imaging device 400 (e.g., the lens assembly 210 of FIG. 2) according to an embodiment of the disclosure may include an image sensor I or 230 and the lens assembly LA. The lens assembly LA may include, for example, at least seven lenses L1, L2, L3, L4, L5, L6, and L7. For example, the lens assembly LA may focus or guide light incident from the outside of the imaging device 400 to the image sensor I or 230. In an embodiment, at least one of the lenses L1, L2, L3, L4, L5, L6, and L7 may be a lens made of plastic. For example, within a range satisfying the condition(s) described below, at least one of the lenses L1, L2, L3, L4, L5, L6, and L7 may be made of plastic. As the at least one lens is made of plastic, a production time or production cost may be reduced, and/or the lenses L1, L2, L3, L4, L5, L6, and L7 may be easily manufactured in designed shapes. In an embodiment, at least one of the lenses L1, L2, L3, L4, L5, L6, and L7 may be made of glass, thereby suppressing the performance deviation of the lens assembly LA caused by a temperature change.

According to an embodiment, at least one of lenses disposed between a lens (e.g., a first lens L1) farthest from the image sensor I or 230 and a lens (e.g., an n^{th} lens or a seventh lens L7) closest to the image sensor I or 230 may be a glass lens. In suppressing a performance deviation of the lens assembly LA caused by a temperature change, at least one of the lenses disposed between the lens (e.g., the first lens L1) farthest from the image sensor I or 230 and the lens (e.g., the n^{th} lens or the seventh lens L7) closest to the image sensor I or 230 may be a glass lens having a positive refractive power. In an embodiment, when at least one of the lenses disposed between the lens (e.g., the first lens L1) farthest from the image sensor I or 230 and the lens (e.g., the n^{th} lens or the seventh lens L7) closest to the image sensor I or 230 is a glass lens having a positive refractive power and includes an aspheric surface, it may be useful for stabilizing optical performance, such as field curvature or aberration control, while suppressing the performance deviation of the lens assembly LA according to a temperature.

According to an embodiment, the lenses L1, L2, L3, L4, L5, L6, and L7 may be sequentially arranged along an optical axis O in a direction from an object obj side toward the image sensor I or 230. For example, the lenses L1, L2, L3, L4, L5, L6, and L7 may be disposed substantially in alignment with the image sensor I or 230 on the optical axis O. In the embodiments described below, ordinal numbers 'first', 'second', 'third', 'fourth', 'fifth', 'sixth', and 'seventh' assigned to the lenses L1, L2, L3, L4, L5, L6, and L7 may refer to an arrangement order from the object obj side. For example, the lens farthest from the image sensor I or 230 (or the first lens on the object obj side) may be referred to as the first lens L1, and the lens closest to the image sensor I or 230 (or the first lens on an image sensor side) may be referred to as the n^{th} lens. When the imaging device 400 and/or the lens assembly LA includes seven lenses, the n^{th} lens may be understood as a seventh lens L7. In an embodiment, in the imaging device 400 and/or the lens assembly LA, a stop (or aperture stop) may be disposed between the first lens L1 and a third lens L3. In the illustrated embodiment, the stop may be understood as being disposed between a second lens L2 and a third lens L3.

According to an embodiment, an optical component such as an infrared (IR) cut filter F may be disposed between any one of the at least seven lenses L1, L2, L3, L4, L5, L6, and L7 and the image sensor I or 230. The IR cut filter F may, for example, suppress or block light (e.g., IR light) of a wavelength that is not identified by a user's naked eye but is detected by a photosensitive material of a film or the image sensor I or 230 from being incident on the image sensor I or 230. This IR cut filter F may be disposed between the n^{th} lens (e.g., the seventh lens L7) and the image sensor I or 230. Depending on the purpose of the imaging device 400, the IR cut filter F may be replaced with a band-pass filter that transmits IR light and suppresses or blocks visible light. In an embodiment, the IR cut filter F may be implemented by a coating material disposed on a surface of any one of the lenses L1, L2, L3, L4, L5, L6, and L7.

According to an embodiment, the phrase "aligned along a direction of the optical axis O" or "aligned with the optical axis O" may refer to being aligned such that the optical axes of the respective lenses L1, L2, L3, L4, L5, L6, and L7 or the optical axis of the image sensor I or 230 (e.g., an imaging plane img) coincide with each other. The imaging plane img may, for example, receive or detect light aligned or focused by the lenses L1, L2, L3, L4, L5, L6, and L7. For example, the imaging plane img may be understood as an active area of the image sensor I or 230. A processor (e.g., the processor 120 of FIG. 1) may obtain an image of an object obj by detecting light focused or guided by the lens assembly LA using the image sensor I or 230. In an embodiment, the processor (e.g., the processor 120 of FIG. 1) may perform a focusing operation and/or a focal length adjustment operation by linearly moving at least one of the lenses L1, L2, L3, L4, L5, L6, and L7 along the direction of the optical axis O with respect to the image sensor I or 230. In an embodiment, the processor may cause the electronic device (e.g., the electronic device 101, 102, 104, or 300 of FIGS. 1, 3, and/or 4) to receive or detect external light (e.g., an object image) using the image sensor I or 230 by executing at least some of instruction(s) stored in memory (e.g., the memory 130 of FIG. 1). For example, the memory may store instructions causing the electronic device to receive at least a portion of light focused on the image sensor I or 230 and/or instruction(s) causing the electronic device to obtain an object image based on received light, and the instruction(s) may be executed by the processor.

In the embodiment(s) described below, although some of the reference numerals assigned to lens surfaces illustrated in the drawings are not directly mentioned, those skilled in the art will be able to easily understand the configuration of each of the lenses L1, L2, L3, L4, L5, L6, and L7 or lens surfaces based on lens data presented through [Tables] described below. It is to be noted that in the embodiments described below, the stop is generally shown as being disposed between the second lens L2 and the third lens L3, but the embodiments of the disclosure are not limited thereto.

Reference numerals for lens surfaces omitted in the drawings may be applied adaptively to configurations of different embodiments, and will be easily understood through the [Tables] described below regarding the lens data of each embodiment. In the detailed description of the embodiments of the disclosure, unless otherwise mentioned, the term 'concave' or 'convex' for the object-side surfaces or the sensor-side surfaces of the lenses L1, L2, L3, L4, L5, L6, and L7 may refer to a lens surface shape at a point intersecting the optical axis O or in a paraxial region intersecting the optical axis O. A shape referred to as 'concave' may refer to a lens surface forming a curved surface in a form in which a lens thickness decreases as it approaches the optical axis O in the paraxial region. A shape referred to as 'convex' may refer to a lens surface forming a curved surface in a form in which a lens thickness increases as it approaches the optical axis O in the paraxial region.

Further, in the following detailed description, values of radii of curvature, radii, effective focal lengths f, a total track length (OAL), air gaps, or thicknesses of the lenses L1, L2, L3, L4, L5, L6, and L7 of the disclosure may all be represented in mm, and a field of view (FOV) (or a half field of view) may be represented in degrees, unless otherwise specified. Also, the radii of curvature, radii, effective focal lengths, OAL, air gaps, or thicknesses of the lenses L1, L2, L3, L4, L5, L6, and L7 may be distances measured on the optical axis O (e.g., distances measured from points where the optical axis O intersects).

According to an embodiment, the lens disposed first from the object obj side among the lenses L1, L2, L3, L4, L5, L6, and L7, for example, the first lens L1 disposed farthest from the image sensor I or 230, may have a negative refractive power. In an embodiment, the first lens L1 may include a sensor-side surface S2 having a concave shape. In an embodiment, the first lens L1 may be a plastic lens or a glass lens. For example, when the first lens L1 is made as a plastic lens, it may be easy to manufacture a designed shape or mass-produce, and when the first lens L1 is made as a glass lens, it may suppress a performance deviation caused by a temperature change.

According to an embodiment, the lens L2 disposed second from the object obj side among the lenses L1, L2, L3, L4, L5, L6, and L7, for example, disposed between the first lens L1 and the image sensor I or 230, may have a positive refractive power. In an embodiment, the second lens L2 may include an object-side surface S3 having a convex shape. In an embodiment, the second lens L2 is a lens having a positive refractive power while being disposed between the first lens and the n^{th} lens (e.g., the seventh lens L7), and may suppress a performance deviation of the lens assembly LA caused by a temperature change by being made as a glass lens. In an embodiment, as at least one of the object-side surface S3 or sensor-side surface S4 of the second lens L2 is implemented as an aspheric surface, the second lens L2 may stabilize the optical performance of the lens assembly LA by suppressing field curvature.

According to an embodiment, the third lens L3 may be disposed third from the object obj side, for example, between the second lens L2 and the image sensor I or 230, and have a positive refractive power or a negative refractive power. In an embodiment, when having a positive refractive power, the third lens L3 may be a glass lens and include an aspheric surface. For example, in suppressing the performance deviation of the lens assembly LA caused by a temperature change or stabilizing optical performance, the third lens L3 may be a glass lens including an aspheric surface and have a positive refractive power.

According to an embodiment, a fourth lens L4 may be disposed fourth from the object obj side, for example, between the third lens L3 and the image sensor I or 230, and have a negative refractive power. In an embodiment, the fourth lens L4 may include a concave sensor-side surface S9. When having a negative refractive power, the fourth lens L4 may be a plastic lens. In an embodiment, the fourth lens L4 may be a glass lens.

According to an embodiment, a fifth lens L5 disposed between the fourth lens L4 and the image sensor I or 230 may have a positive refractive power or a negative refractive power. In an embodiment, the fifth lens L5 may include a sensor-side surface S11 having a convex shape. In an embodiment, when having a positive refractive power, the fifth lens L5 may be a glass lens including an aspheric surface. In an embodiment, when at least one of the second lens L2 or the third lens L3 is a glass lens having a positive refractive power and including an aspheric surface, the refractive power or the material of the fifth lens L5 may be implemented differently from those mentioned above. For example, when at least one of the lenses disposed between the first lens L1 and the n^{th} lens (e.g., the seventh lens L7) is a glass lens having a positive refractive power and including an aspheric surface, the refractive powers or materials of the remaining lenses may be appropriately selected in consideration of the specifications or manufacturing costs of the lens assembly LA.

According to an embodiment, a sixth lens L6 disposed between the fifth lens L5 and the image sensor I or 230 may have a positive refractive power. When having a positive refractive power, the sixth lens L6 may be a glass lens including an aspheric surface. In an embodiment, when at least one of the second lens L2, the third lens L3, and/or the fifth lens L5 is a glass lens having a positive refractive power and including an aspheric surface, the material of the sixth lens L6 may be implemented differently from that mentioned above. For example, when at least one of the lenses disposed between the first lens L1 and the n^{th} lens (e.g., the seventh lens L7) is a glass lens having a positive refractive power and including an aspheric surface, the refractive powers or materials of the remaining lenses may be appropriately selected in consideration of the specifications or manufacturing costs of the lens assembly LA.

According to an embodiment, the seventh lens L7 disposed between the sixth lens L6 and the image sensor I or 230 (or the n^{th} lens disposed closest to the image sensor I or 230) may include a sensor-side surface S15 having a concave shape while having a negative refractive power. In an embodiment, the IR cut filter F may be disposed between the seventh lens L7 and the image sensor I or 230. As mentioned above, the IR cut filter F may block light in the wavelength band that is not detected by the user's naked eye but is detected by a photosensitive material or the image sensor I or 230. In an embodiment, when the imaging device 400 functions as a camera (e.g., a depth camera) for detecting light in the IR wavelength band, the IR cut filter F may be replaced with a band-pass filter and/or may be implemented by a coating material disposed on a lens surface of any one of the lenses L1, L2, L3, L4, L5, L6, and L7.

According to an embodiment, the lens assembly LA may satisfy a condition presented through the following [Equation 1]. [Equation 1] $1.5 < \frac{f 1}{fn} < 2.5$

Herein, 'f1' may be a focal length of the lens (e.g., the first lens L1) farthest from the image sensor I or 230, and 'fn' may be a focal length of the lens closest to the image sensor I or 230. When the lens assembly LA includes the seven lenses L1, L2, L3, L4, L5, L6, and L7, 'fn' may refer to the focal length of the seventh lens L7.

According to an embodiment, [Equation 1] presents the ratio of the focal length of the first lens on the object side to the focal length of the first lens on the image sensor side. When a value calculated by [Equation 1] is less than 1.5, an effective diameter of the first lens L1 may increase, making it difficult to be mounted in a miniaturized electronic device. In an embodiment, when the value calculated by [Equation 1] is greater than 2.5, the refractive power of the n^{th} lens (e.g., the seventh lens L7) may be weak, making it difficult to suppress distortion aberration. For example, the lens assembly LA may secure stable aberration control performance while being miniaturized, by satisfying the condition of [Equation 1]. In an embodiment, the value calculated by [Equation 1] may be greater than approximately 1.6 and less than approximately 2.35.

According to an embodiment, the lens assembly LA may satisfy a condition presented through the following [Equation 2]. [Equation 2] $1.5 < \frac{R 6 - R 7}{R 6 + R 7} < 3.5$

Herein, 'R6' may be a radius of curvature of an object-side surface S6 of the third lens L3, and 'R7' may be a radius of curvature of a sensor-side surface S7 of the third lens L3. For example, [Equation 2] may be understood as presenting a condition regarding the radii of curvature of the object-side surface S6 and the sensor-side surface S7 of the third lens L3. As mentioned above, the radius of curvature may refer to a radius of curvature at a point where the optical axis O intersects the object-side surface S6 or the sensor-side surface S7. In an embodiment, the third lens L3 may be a glass lens including an aspheric surface and having a positive refractive power while satisfying the condition of [Equation 2].

According to an embodiment, when a value calculated by [Equation 2] is less than 1.5, the refractive power of the third lens L3 may increase and the radius of curvature of the sensor-side surface S7 may decrease. In this case, spherical aberration or field curvature may increase, degrading the optical performance of the lens assembly LA. In an embodiment, when the value calculated by [Equation 2] is greater than 3.5, the radius of curvature of the object-side surface S6 of the third lens L3 may decrease, and coma aberration may increase. For example, when the condition presented through [Equation 2] is satisfied, the optical performance of the lens assembly LA regarding aberration control or field curvature may be stabilized. In an embodiment, the value calculated by [Equation 2] may be greater than approximately 1.75 and less than approximately 3.0.

According to an embodiment, the lens assembly LA may satisfy a condition presented through the following [Equation 3]. [Equation 3] $0.8 < \left|\frac{f 4}{f 5}\right| < 2.0$

Herein, 'f4' may be a focal length of the fourth lens L4, and 'f5' may be a focal length of the fifth lens L5. For example, [Equation 3] may present a condition regarding the focal lengths of the fourth lens L4 and the fifth lens L5. In an embodiment, when a value calculated by [Equation 3] is less than 0.8, it may be difficult to control distortion aberration caused by the fifth lens L5, and when it is greater than 2.0, coma aberration or astigmatism may increase. For example, as the condition of [Equation 3] is satisfied, aberration control of the lens assembly LA may be easier. In an embodiment, the value calculated by [Equation 3] may be approximately 0.85 or more and approximately 1.8 or less.

In the embodiments described below, among the lenses disposed between the first lens and the n^{th} lens (e.g., the seventh lens L7), the second lens, the third lens, the fifth lens, and/or the sixth lens may have a positive refractive power. In an embodiment, at least one of the second lens, the third lens, the fifth lens, and/or the sixth lens may be a glass lens having a positive refractive power. For example, in order to suppress a performance deviation caused by a temperature change, at least one of the second lens, the third lens, the fifth lens, and/or the sixth lens may be a glass lens having a positive refractive power. In an embodiment, control of optical performance such as aberration control or field curvature may be facilitated by forming at least one of the second lens, the third lens, the fifth lens, and/or the sixth lens as a glass lens having a positive refractive power and including an aspheric surface. In an embodiment, at least one (e.g., the first lens L1, the fourth lens L4, and/or the seventh lens L7) of the at least seven lenses L1, L2, L3, L4, L5, L6, and L7 may be a plastic lens. For example, in order to stabilize the optical performance of the lens assembly LA while reducing manufacturing costs, at least one of the at least seven lenses L1, L2, L3, L4, L5, L6, and L7 may be made as a plastic lens.

According to an embodiment, the lens assembly LA as described above may be implemented with approximately seven lenses L1 to L7 and satisfy the above-described conditions, thereby facilitating miniaturization. In an embodiment, when the lens assembly LA satisfies the above-described conditions, optical performance such as aberration control or field curvature may be improved or stabilized. In an embodiment, the lens assembly LA as described above may implement a field of view (FOV) of approximately 110 degrees or more and approximately 130 degrees or less, and formation of at least one of the lens(es) having a positive refractive power in the lens assembly LA as a glass lens may suppress an optical performance deviation caused by a temperature change. In an embodiment, the lens assembly LA may provide wide-angle or ultra-wide-angle performance corresponding to a high-performance image sensor I or 230 including pixels having a size of 0.7um or less.

According to an embodiment, the imaging device 400 and/or the lens assembly LA thereof may implement an FOV of approximately 122.6 degrees, while having a focal length of approximately 2.16mm and an F-number of approximately 2.23. In an embodiment, the imaging device 400 and/or the lens assembly LA thereof may satisfy at least some of the above-described condition(s), and be manufactured to the specifications illustrated in the following [Table 1]. In [Table 1], symbol '*' appended to the reference numeral of a lens surface may refer to an aspheric lens surface.

**[Table 1]**

| Lens surface (Surf) | Radius of curvature | Thickness (Thick) | Focal length (EFL) | Refractive index | Abbe number (vd) |
|---|---|---|---|---|---|
| | (Radius) | | | (nd) | |
| obj | infinity | infinity | | | |
| S1* | -3.691 | 0.394 | -4.23 | 1.544 | 55.9 |
| S2* | 6.352 | 0.790 | | | |
| S3* | 1.931 | 0.253 | 10.54 | 1.567 | 37.4 |
| S4* | 2.717 | 0.410 | | | |
| stop | infinity | 0.072 | | | |
| S6* | 5.772 | 0.570 | 3.17 | 1.619 | 63.9 |
| S7* | -2.862 | 0.404 | | | |
| S8* | 3.970 | 0.180 | -8.82 | 1.661 | 20.4 |
| S9* | 2.319 | 0.050 | | | |
| S10* | 8.683 | 0.690 | 5.04 | 1.544 | 55.9 |
| S11* | -3.895 | 0.030 | | | |
| S12* | -3.619 | 0.697 | 1.97 | 1.544 | 55.9 |
| S13* | -0.882 | 0.039 | | | |
| S14* | 2.298 | 0.413 | -1.81 | 1.614 | 26.0 |
| S15* | 0.699 | 0.529 | | | |
| S16 | infinity | 0.110 | infinity | 1.517 | 64.2 |
| S17 | infinity | 0.698 | | | |
| img | infinity | 0 | | | |

[Table 2], [Table 3], and [Table 4] below describe aspherical coefficients of the lenses L1, L2, L3, L4, L5, L6, and L7, and the definition of an aspheric surface is given by the following [Equation 4]. [Equation 4] $x = \frac{{y}^{2} / R}{1 + \sqrt{1 - \left(1+k\right) {\left(y/R\right)}^{2}}} + {\sum }_{i} \left({A}_{i}\right) \left({y}^{i}\right)$

In [Equation 9], 'x' is a distance in the direction of the optical axis O from a point where the optical axis O passes through a lens surface, and 'y' is a distance in a direction perpendicular to the optical axis O from the optical axis O. 'R' represents a radius of curvature at a vertex of a lens, 'k' represents a Conic constant, and 'Ai' represents aspherical coefficients, which may be described as 'A', 'B', 'C', 'D', 'E', 'F', 'G', 'H', 'J', 'K', 'L', 'M', 'N', and 'O' in the [Tables] described below.

**[Table 2]**

| Lens surface (Surf) | S1 | S2 | S3 | S4 | S6 |
|---|---|---|---|---|---|
| Radius of curvature (Radius) | -3.69109E+00 | 6.35225E+00 | 1.93083E+00 | 2.71711E+00 | 5.77226E+00 |
| k(Conic) | -5.45101E+01 | 6.88762E+00 | -5.68120E+00 | -4.51762E+00 | -2.70611E+01 |
| A(4th)/C4 | 6.97629E-03 | 6.11725E-01 | -6.80937E-02 | 1.94816E-04 | 1.15692E-03 |
| B(6th)/C5 | -1.66875E-04 | -2.40855E-01 | -2.38430E-03 | -3.72762E-04 | -1.40344E-04 |
| C(8th)/C6 | 4.42323E-06 | 5.06468E-02 | 6.06650E-03 | 1.27861E-04 | -6.10526E-06 |
| D(10th)/C7 | -9.39149E-08 | -3.74991E-03 | -6.70128E-04 | 9.09528E-06 | -2.31501E-06 |
| E(12th)/C8 | 1.42063E-09 | -3.53583E-04 | -3.60897E-04 | 4.96039E-06 | 4.46512E-07 |
| F(14th)/C9 | -1.39943E-11 | -1.69452E-03 | 6.60089E-05 | -2.82875E-06 | -1.68229E-08 |
| G(16th)/C10 | 7.98385E-14 | 9.37358E-04 | 3.44759E-05 | 8.24378E-07 | 0.00000E+00 |
| H(18th)/C11 | -4.63710E-16 | -1.89779E-05 | -1.07733E-05 | -1.20469E-07 | 0.00000E+00 |
| J(20th)/C12 | -3.39274E-16 | -6.85667E-05 | 8.68245E-07 | 7.35111E-09 | 0.00000E+00 |
| K(22th)/C13 | 0.00000E+00 | 0.00000E+00 | 0.00000E+00 | 0.00000E+00 | 0.00000E+00 |
| L(24th)/C14 | 0.00000E+00 | 0.00000E+00 | 0.00000E+00 | 0.00000E+00 | 0.00000E+00 |
| M(26th)/C15 | 0.00000E+00 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 | 0.00000E+00 |

**[Table 3]**

| Lens surface (Surf) | S7 | S8 | S9 | S10 | S11 |
|---|---|---|---|---|---|
| Radius of curvature (Radius) | -2.86153E+00 | 3.97008E+00 | 2.31853E+00 | 8.68279E+00 | -3.89509E+00 |
| k(Conic) | -3.09892E-01 | -1.14819E+01 | -2.21605E+01 | -1.47373E+01 | -4.32349E-01 |
| A(4th)/C4 | -9.10269E-02 | -3.25020E-02 | -1.03924E-02 | -4.36348E-03 | -3.45791E-03 |
| B(6th)/C5 | -2.13435E-03 | 5.10684E-04 | -1.74066E-04 | -3.78582E-05 | -2.43081E-04 |
| C(8th)/C6 | -2.15671E-04 | -1.23507E-04 | 3.47811E-05 | 5.18774E-05 | 8.57456E-05 |
| D(10th)/C7 | 3.36736E-05 | 3.06638E-05 | 3.99756E-07 | -6.60690E-06 | -6.71538E-06 |
| E(12th)/C8 | 3.71801E-06 | -5.68339E-06 | -3.70059E-07 | 4.53449E-07 | -1.50295E-07 |
| F(14th)/C9 | 7.91190E-06 | 7.63881E-07 | 3.88908E-08 | -1.97165E-08 | 6.14436E-08 |
| G(16th)/C10 | 0.00000E+00 | -6.56737E-08 | -2.19463E-09 | 5.76127E-10 | -4.82712E-09 |
| H(18th)/C11 | 0.00000E+00 | 3.05644E-09 | 7.13883E-11 | -1.15799E-11 | 2.03348E-10 |
| J(20th)/C12 | 0.00000E+00 | -5.70531E-11 | -1.23465E-12 | 1.60402E-13 | -5.17536E-12 |
| K(22th)/C13 | 0.00000E+00 | 0.00000E+00 | 8.65277E-15 | -1.50398E-15 | 7.97622E-14 |
| L(24th)/C14 | 0.00000E+00 | 0.00000E+00 | 0.00000E+00 | 1.13875E-17 | -3.14355E-16 |
| M(26th)/C15 | 0.00000E+00 | 0.00000E+00 | 0.00000E+00 | 2.34925E-18 | 3.31603E-16 |
| N(28th)/C16 | 0.00000E+00 | 0.00000E+00 | 0.00000E+00 | 9.89334E-19 | 0.00000E+00 |
| O(30th)/C17 | 0.00000E+00 | 0.00000E+00 | 0.00000E+00 | 0.00000E+00 | 0.00000E+00 |

**[Table 4]**

| Lens surface (Surf) | S12 | S13 | S14 | S15 |
|---|---|---|---|---|
| Radius of curvature (Radius) | -3.61872E+00 | -8.81533E-01 | 2.29796E+00 | 6.99281E-01 |
| k(Conic) | -1.09049E+00 | -2.29230E+00 | -4.16084E+01 | -5.24935E+00 |
| A(4th)/C4 | 2.85992E-03 | 9.95270E-03 | -1.70448E-03 | -1.58839E+00 |
| B(6th)/C5 | -3.68713E-04 | -7.62738E-04 | -2.99363E-05 | 3.40610E-01 |
| C(8th)/C6 | 1.03201E-04 | 7.17968E-05 | 6.39758E-07 | -7.63374E-02 |
| D(10th)/C7 | -1.20894E-05 | -6.55057E-06 | -4.13741E-09 | 7.90405E-03 |
| E(12th)/C8 | 7.53381E-07 | 4.86686E-07 | 3.94968E-12 | -1.16381E-02 |
| F(14th)/C9 | -2.65247E-08 | -2.69081E-08 | 8.07054E-14 | -2.21272E-05 |
| G(16th)/C10 | 4.44765E-10 | 1.07265E-09 | -4.35084E-16 | -1.68431E-04 |
| H(18th)/C11 | 2.75765E-12 | -3.06021E-11 | 1.33916E-18 | 5.03832E-04 |
| J(20th)/C12 | -3.25365E-13 | 6.22952E-13 | 6.77626E-21 | -4.82255E-05 |
| K(22th)/C13 | 7.96029E-15 | -9.19665E-15 | 0.00000E+00 | 0.00000E+00 |
| L(24th)/C14 | -1.83084E-16 | 3.61446E-17 | 0.00000E+00 | 0.00000E+00 |
| M(26th)/C15 | -9.23994E-17 | -1.69881E-16 | 0.00000E+00 | 0.00000E+00 |
| N(28th)/C16 | 4.04599E-16 | -6.22010E-17 | 0.00000E+00 | 0.00000E+00 |
| O(30th)/C17 | -5.88993E-17 | 1.94953E-16 | 0.00000E+00 | 0.00000E+00 |

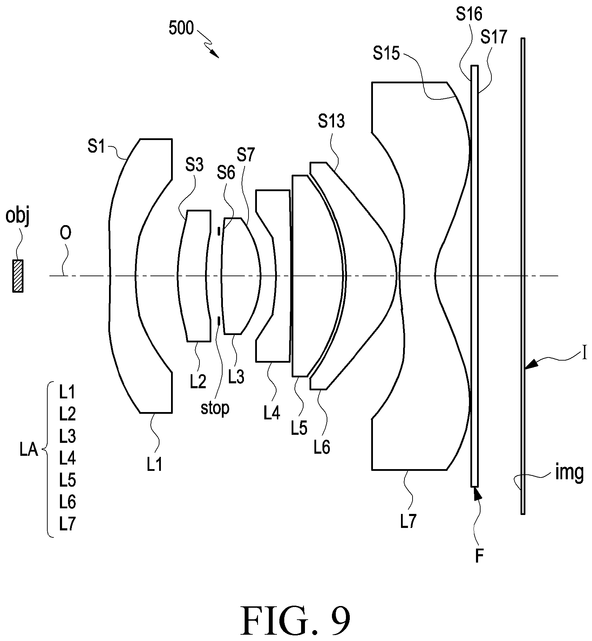

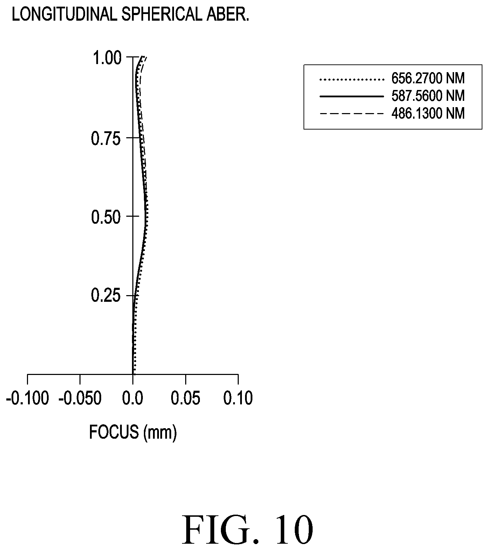

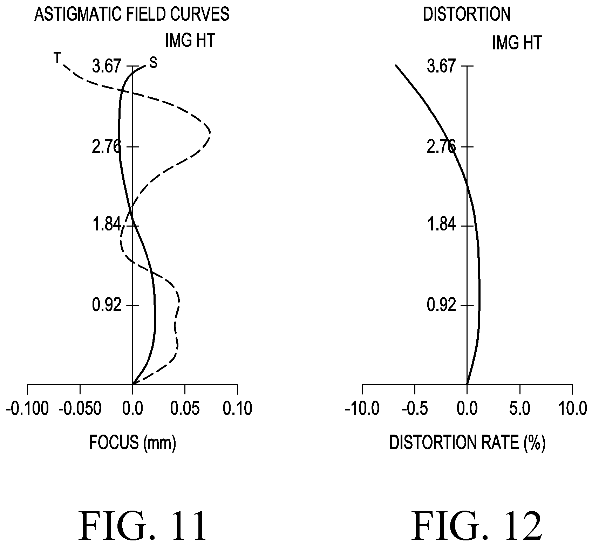

FIG. 9 is a diagram illustrating the imaging device 500 and/or the lens assembly LA according to an embodiment of the disclosure. FIG. 10 is a graph illustrating spherical aberration of the lens assembly LA of FIG. 9 according to an embodiment of the disclosure. FIG. 11 is a graph illustrating astigmatism of the lens assembly LA of FIG. 9 according to an embodiment of the disclosure. FIG. 12 is a graph illustrating distortion of the lens assembly LA of FIG. 9 according to an embodiment of the disclosure.

According to an embodiment, the imaging device 500 and/or the lens assembly LA thereof in FIG. 9 may implement an FOV of approximately 121.8 degrees, while having a focal length of approximately 2.2mm and an F-number of approximately 2.1. In an embodiment, the imaging device 500 and/or the lens assembly LA thereof may satisfy at least some of the above-described condition(s), be manufactured to the specifications illustrated in the following [Table 5], and have the aspherical coefficients of [Table 6], [Table 7], and [Table 8].

**[Table 5]**

| Lens surface (Surf) | Radius of curvature (Radius) | Thickness (Thick) | Focal length (EFL) | Refractive index (nd) | Abbe number (vd) |
|---|---|---|---|---|---|
| obj | infinity | infinity | | | |
| S1* | -3.6323 | 0.3851 | -4.33 | 1.5440 | 55.9 |
| S2* | 6.9696 | 0.6389 | | | |
| S3* | 2.0675 | 0.4460 | 7.45 | 1.5672 | 37.4 |
| S4* | 3.7307 | 0.2016 | | | |
| stop | infinity | 0.0300 | | | |
| S6* | 7.3473 | 0.6046 | 3.06 | 1.5440 | 55.9 |
| S7* | -2.0921 | 0.2565 | | | |
| S8* | -17.9139 | 0.2300 | -5.14 | 1.6608 | 20.4 |
| S9* | 4.2170 | 0.0312 | | | |
| S10* | 382.1701 | 0.7798 | 5.07 | 1.5440 | 55.9 |
| S11* | -2.7775 | 0.0300 | | | |
| S12* | -2.6519 | 0.8036 | 1.91 | 1.5440 | 55.9 |
| S13* | -0.8277 | 0.0300 | | | |
| S14* | 2.4244 | 0.5490 | -1.99 | 1.6144 | 26.0 |
| S15* | 0.7424 | 0.5315 | | | |
| S16 | infinity | 0.1100 | infinity | 1.5168 | 64.2 |
| S17 | infinity | 0.7098 | | | |
| img | infinity | 0.0000 | | | |

**[Table 6]**

| Lens surface (Surf) | S1 | S2 | S3 | S4 | S6 |
|---|---|---|---|---|---|
| Radius of curvature (Radius) | -3.63230E+00 | 6.96956E+00 | 2.06746E+00 | 3.73070E+00 | 1.00000E+18 |
| k(Conic) | -6.65709E+01 | 6.06419E+00 | -3.46277E+00 | 1.03377E+00 | 0.00000E+00 |
| A(4th)/C4 | 7.77854E-01 | 2.05092E-02 | -4.16902E-02 | 3.17685E-03 | 0.00000E+00 |
| B(6th)/C5 | -1.28661E-01 | -8.57034E-04 | -1.01863E-02 | 5.70916E-04 | 0.00000E+00 |
| C(8th)/C6 | 3.56771E-02 | 5.35970E-05 | 2.45696E-03 | 6.38239E-05 | 0.00000E+00 |
| D(10th)/C7 | -8.82503E-03 | -3.56824E-06 | 6.00195E-04 | 6.85787E-05 | 0.00000E+00 |
| E(12th)/C8 | 4.23254E-03 | 2.04044E-07 | 9.85664E-06 | -1.86117E-05 | 0.00000E+00 |
| F(14th)/C9 | -9.42387E-04 | -9.72059E-09 | -8.82681E-05 | 1.36254E-05 | 0.00000E+00 |
| G(16th)/C10 | 4.42082E-04 | 3.18650E-10 | -1.04418E-05 | -4.19724E-06 | 0.00000E+00 |
| H(18th)/C11 | -1.00704E-04 | -5.84560E-12 | 6.97239E-06 | 7.64308E-07 | 0.00000E+00 |
| J(20th)/C12 | 2.16855E-05 | 4.45028E-14 | 1.87079E-06 | -4.36569E-08 | 0.00000E+00 |
| K(22th)/C13 | 0.00000E+00 | 0.00000E+00 | 0.00000E+00 | 0.00000E+00 | 0.00000E+00 |
| L(24th)/C14 | 0.00000E+00 | 0.00000E+00 | 0.00000E+00 | 0.00000E+00 | 0.00000E+00 |
| M(26th)/C15 | 0.00000E+00 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 | 0.00000E+00 |

**[Table 7]**

| Lens surface (Surf) | S7 | S8 | S9 | S10 | S11 |
|---|---|---|---|---|---|
| Radius of curvature (Radius) | -2.09208E+00 | -1.79139E+01 | 4.21698E+00 | 3.82170E+02 | -2.77754E+00 |
| k(Conic) | 6.27682E-01 | -2.01045E+00 | -2.18347E+01 | 3.75301E-03 | 6.33745E-01 |
| A(4th)/C4 | -2.69678E-02 | -3.77372E-02 | -2.20194E-02 | -7.48842E-03 | -5.10731E-03 |
| B(6th)/C5 | -2.53836E-04 | 8.93372E-04 | 1.69807E-03 | 8.74398E-04 | -3.39893E-04 |
| C(8th)/C6 | -4.53416E-05 | -1.62934E-04 | -1.70718E-04 | -6.08586E-05 | 4.81559E-04 |
| D(10th)/C7 | -3.16274E-06 | 3.89613E-05 | 2.04111E-05 | 2.55147E-06 | -1.26458E-04 |
| E(12th)/C8 | 4.58074E-06 | -5.13350E-06 | -1.95800E-06 | -6.47501E-08 | 1.82391E-05 |
| F(14th)/C9 | -3.94506E-06 | 2.59683E-07 | 1.24939E-07 | 1.00680E-09 | -1.81901E-06 |
| G(16th)/C10 | 1.20690E-06 | 3.03680E-09 | -4.95086E-09 | -9.39938E-12 | 1.41654E-07 |
| H(18th)/C11 | -1.45150E-07 | -9.21945E-10 | 1.10542E-10 | 4.84684E-14 | -8.93772E-09 |
| J(20th)/C12 | 6.94241E-09 | 3.07425E-11 | -1.06087E-12 | -2.25866E-16 | 4.42810E-10 |
| K(22th)/C13 | 0.00000E+00 | 0.00000E+00 | 0.00000E+00 | 0.00000E+00 | -1.63059E-11 |
| L(24th)/C14 | 0.00000E+00 | 0.00000E+00 | 0.00000E+00 | 0.00000E+00 | 4.21926E-13 |
| M(26th)/C15 | 0.00000E+00 | 0.00000E+00 | 0.00000E+00 | 0.00000E+00 | -7.55787E-15 |
| N(28th)/C16 | 0.00000E+00 | 0.00000E+00 | 0.00000E+00 | 0.00000E+00 | 1.60360E-16 |
| O(30th)/C17 | 0.00000E+00 | 0.00000E+00 | 0.00000E+00 | 0.00000E+00 | -8.18098E-17 |

**[Table 8]**

| Lens surface (Surf) | S12 | S13 | S14 | S15 |
|---|---|---|---|---|
| Radius of curvature (Radius) | -2.65185E+00 | -8.27697E-01 | 2.42435E+00 | 7.42408E-01 |
| k(Conic) | 5.68653E-01 | -1.60007E+00 | -3.60879E+01 | -4.48506E+00 |
| A(4th)/C4 | -4.44994E-03 | 9.93976E-03 | -4.65546E-04 | -3.49554E-04 |
| B(6th)/C5 | -1.81494E-04 | -9.11094E-04 | -5.36048E-05 | 9.66256E-07 |
| C(8th)/C6 | 4.64036E-04 | 8.58202E-05 | 1.35646E-06 | -4.76255E-11 |
| D(10th)/C7 | -1.11664E-04 | -5.90701E-06 | -2.15763E-08 | -3.01352E-11 |
| E(12th)/C8 | 1.36988E-05 | 2.61163E-07 | 2.28258E-10 | 2.26290E-13 |
| F(14th)/C9 | -1.04083E-06 | -7.15967E-09 | -1.50526E-12 | -9.00108E-16 |
| G(16th)/C10 | 5.28864E-08 | 1.17475E-10 | 5.85411E-15 | 3.71763E-18 |
| H(18th)/C11 | -1.86525E-09 | -1.05431E-12 | -1.22417E-17 | 1.71397E-18 |
| J(20th)/C12 | 4.63675E-11 | 3.79492E-15 | 6.20028E-19 | -1.25869E-18 |
| K(22th)/C13 | -8.10590E-13 | 0.00000E+00 | 0.00000E+00 | 0.00000E+00 |
| L(24th)/C14 | 9.82921E-15 | 0.00000E+00 | 0.00000E+00 | 0.00000E+00 |
| M(26th)/C15 | 2.80090E-16 | 0.00000E+00 | 0.00000E+00 | 0.00000E+00 |
| N(28th)/C16 | 2.78955E-16 | 0.00000E+00 | 0.00000E+00 | 0.00000E+00 |
| O(30th)/C17 | -7.07378E-16 | 0.00000E+00 | 0.00000E+00 | 0.00000E+00 |

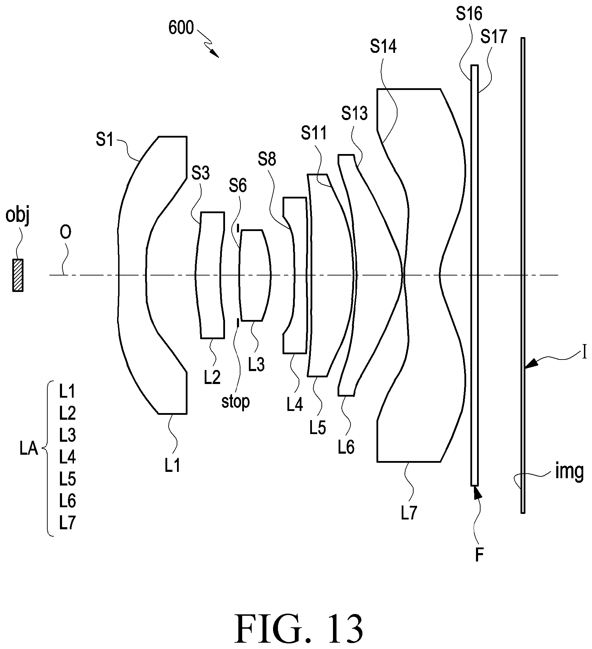

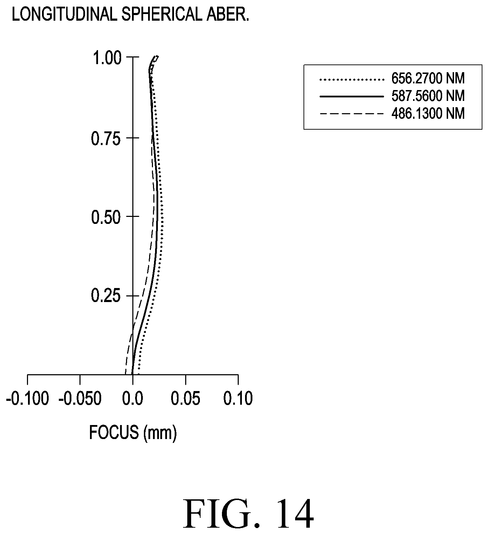

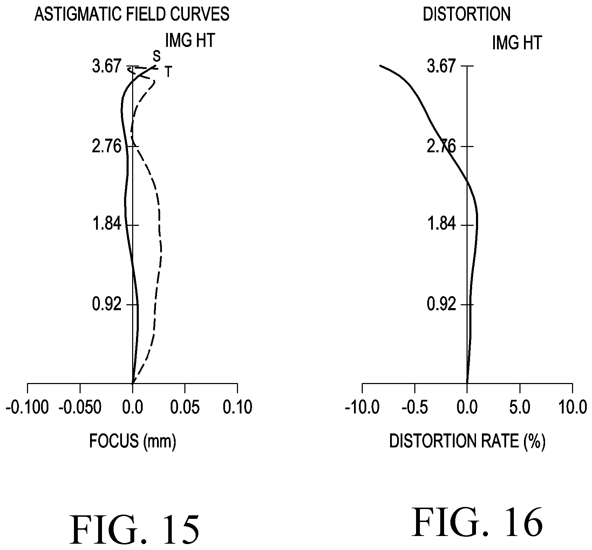

FIG. 13 is a diagram illustrating the imaging device 600 and/or the lens assembly LA according to an embodiment of the disclosure. FIG. 14 is a graph illustrating spherical aberration of the lens assembly LA of FIG. 13 according to an embodiment of the disclosure. FIG. 15 is a graph illustrating astigmatism of the lens assembly LA of FIG. 13 according to an embodiment of the disclosure. FIG. 16 is a graph illustrating distortion of the lens assembly LA of FIG. 13 according to an embodiment of the disclosure.

According to an embodiment, the imaging device 600 and/or the lens assembly LA thereof in FIG. 13 may implement an FOV of approximately 121.9 degrees, while having a focal length of approximately 2.22mm and an F-number of approximately 2.24. In an embodiment, the imaging device 600 and/or the lens assembly LA thereof may satisfy at least some of the above-described condition(s), be manufactured to the specifications illustrated in the following [Table 9], and have the aspherical coefficients of [Table 10], [Table 11], and [Table 12].

**[Table 9]**

| Lens surface (Surf) | Radius of curvature (Radius) | Thickness (Thick) | Focal length (EFL) | Refractive index (nd) | Abbe number (vd) |
|---|---|---|---|---|---|
| obj | infinity | infinity | | | |
| S1* | -4.074 | 0.408 | -4.43 | 1.544 | 55.9 |
| S2* | 6.104 | 0.771 | | | |
| S3* | 2.474 | 0.382 | 8.52 | 1.689 | 31.2 |
| S4* | 4.007 | 0.297 | | | |
| stop | infinity | 0.005 | | | |
| S6* | 7.300 | 0.493 | 3.18 | 1.592 | 67.0 |
| S7* | -2.473 | 0.368 | | | |
| S8* | 9.330 | 0.180 | -6.90 | 1.661 | 20.4 |
| S9* | 3.038 | 0.078 | | | |
| S10* | 16.620 | 0.671 | 5.86 | 1.544 | 55.9 |
| S11* | -3.884 | 0.039 | | | |
| S12* | -3.549 | 0.706 | 2.29 | 1.544 | 55.9 |
| S13* | -0.986 | 0.035 | | | |
| S14* | 2.341 | 0.544 | -2.33 | 1.614 | 26.0 |
| S15* | 0.810 | 0.501 | | | |
| S16 | infinity | 0.110 | infinity | 1.517 | 64.2 |
| S17 | infinity | 0.698 | | | |
| img | infinity | 0 | | | |

**[Table 10]**

| Lens surface (Surf) | S1 | S2 | S3 | S4 | S6 |
|---|---|---|---|---|---|
| Radius of curvature (Radius) | -4.07383E+00 | 6.10376E+00 | 2.47420E+00 | 4.00705E+00 | 7.30035E+00 |
| k(Conic) | -5.98165E+01 | 8.44666E+00 | -6.99638E+00 | -1.01297E+01 | 1.91466E+00 |
| A(4th)/C4 | 9.41878E-01 | 1.56035E-02 | -5.59121E-02 | 1.85178E-03 | -4.72194E-04 |
| B(6th)/C5 | -1.46706E-01 | -4.63233E-04 | -5.33343E-03 | 1.87200E-03 | 2.41050E-04 |
| C(8th)/C6 | 4.20139E-02 | 1.77973E-05 | 3.07379E-03 | 9.66738E-04 | 3.19634E-05 |
| D(10th)/C7 | -1.09859E-02 | -2.31564E-07 | 1.61089E-04 | 1.23452E-04 | 1.82397E-05 |
| E(12th)/C8 | 4.81495E-03 | -6.32746E-08 | -1.36593E-04 | 3.65584E-05 | -5.53325E-06 |
| F(14th)/C9 | -1.12647E-03 | 6.90588E-09 | -4.27771E-05 | 1.39924E-06 | 1.36890E-06 |
| G(16th)/C10 | 6.54952E-04 | -3.91881E-10 | -1.21351E-06 | 1.65068E-06 | -3.87190E-06 |
| H(18th)/C11 | -1.98589E-04 | 1.36160E-11 | -3.67924E-07 | -1.33826E-07 | 2.41166E-06 |
| J(20th)/C12 | 3.80115E-05 | -2.85870E-13 | -5.70925E-07 | 5.21529E-07 | -3.18574E-07 |
| K(22th)/C13 | -3.71410E-05 | 3.31917E-15 | 0.00000E+00 | 0.00000E+00 | 0.00000E+00 |
| L(24th)/C14 | -9.96391E-06 | -2.08167E-17 | 0.00000E+00 | 0.00000E+00 | 0.00000E+00 |
| M(26th)/C15 | 0.00000E+00 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 | 0.00000E+00 |

**[Table 11]**

| Lens surface (Surf) | S7 | S8 | S9 | S10 | S11 |
|---|---|---|---|---|---|
| Radius curvature (Radius) | -2.47333E+00 | 9.33023E+00 | 3.03797E+00 | 1.66201E+01 | -3.88414E+00 |
| k(Conic) | -1.44925E+00 | 1.23264E+01 | -2.86169E+01 | -5.29773E+01 | 7.20871E-01 |
| A(4th)/C4 | -2.12391E-02 | -3.03355E-02 | -1.47366E-02 | -6.62156E-03 | -7.64168E-03 |
| B(6th)/C5 | -1.82636E-04 | 8.22252E-04 | 4.45415E-04 | 1.23636E-05 | 1.49312E-03 |
| C(8th)/C6 | -3.03728E-05 | -1.21013E-04 | -2.06387E-05 | 8.61185E-06 | -2.76626E-04 |
| D(10th)/C7 | 1.59267E-05 | 3.58034E-05 | 2.16703E-05 | 1.91374E-05 | 3.56976E-05 |
| E(12th)/C8 | -7.84357E-06 | -1.63301E-05 | -7.76499E-06 | -5.18350E-06 | -2.99919E-06 |
| F(14th)/C9 | 4.39232E-06 | 5.58934E-06 | 1.54110E-06 | 6.64466E-07 | 9.30329E-08 |
| G(16th)/C10 | -1.09360E-06 | -1.20017E-06 | -2.00736E-07 | -5.12838E-08 | 1.23092E-08 |
| H(18th)/C11 | 1.18042E-07 | 1.60229E-07 | 1.82020E-08 | 2.54174E-09 | -1.95908E-09 |
| J(20th)/C12 | 0.00000E+00 | -1.30233E-08 | -1.16443E-09 | -8.13362E-11 | 1.38691E-10 |
| K(22th)/C13 | 0.00000E+00 | 5.89856E-10 | 5.16323E-11 | 1.61753E-12 | -5.96158E-12 |
| L(24th)/C14 | 0.00000E+00 | -1.13781E-11 | -1.50855E-12 | -1.80367E-14 | 1.63347E-13 |
| M(26th)/C15 | 0.00000E+00 | 0.00000E+00 | 2.60727E-14 | 8.48524E-17 | -3.07655E-15 |
| N(28th)/C16 | 0.00000E+00 | 0.00000E+00 | -2.02055E-16 | 0.00000E+00 | 4.22363E-16 |
| O(30th)/C17 | 0.00000E+00 | 0.00000E+00 | 0.00000E+00 | 0.00000E+00 | -2.02610E-16 |

**[Table 12]**

| Lens surface (Surf) | S12 | S13 | S14 | S15 |
|---|---|---|---|---|
| Radius of curvature (Radius) | -3.54868E+00 | -9.86343E-01 | 2.34096E+00 | 8.10378E-01 |
| k(Conic) | -8.43994E-02 | -2.14639E+00 | -1.49904E+01 | -4.30467E+00 |
| A(4th)/C4 | 2.09514E-01 | 6.38116E-03 | -2.70111E-03 | -6.49735E-04 |
| B(6th)/C5 | -6.30195E-02 | -4.12326E-04 | -3.57126E-05 | 5.48677E-06 |
| C(8th)/C6 | 2.76682E-02 | 4.33401E-05 | 5.27384E-06 | -4.07272E-08 |
| D(10th)/C7 | 5.00116E-03 | -3.85335E-06 | -2.63187E-07 | 1.41650E-10 |
| E(12th)/C8 | -5.61839E-03 | 3.46787E-07 | 7.76966E-09 | 7.30474E-13 |
| F(14th)/C9 | 4.99012E-03 | -2.78858E-08 | -1.51882E-10 | -1.31716E-14 |
| G(16th)/C10 | -1.87797E-03 | 1.63752E-09 | 2.02959E-12 | 8.72275E-17 |
| H(18th)/C11 | 3.31134E-04 | -6.63146E-11 | -1.82778E-14 | -1.51958E-18 |
| J(20th)/C12 | -1.09731E-03 | 1.84546E-12 | 1.08037E-16 | -1.97697E-18 |
| K(22th)/C13 | 2.30734E-04 | -3.50428E-14 | 1.16287E-18 | -1.67458E-18 |
| L(24th)/C14 | 1.03189E-04 | 6.69217E-16 | 1.57887E-18 | -1.62630E-19 |
| M(26th)/C15 | 1.74692E-04 | 1.71030E-16 | 0.00000E+00 | -1.51619E-19 |
| N(28th)/C16 | -1.47830E-04 | -2.31443E-17 | 0.00000E+00 | 1.61307E-18 |
| O(30th)/C17 | 0.00000E+00 | 1.41102E-16 | 0.00000E+00 | 2.65799E-18 |

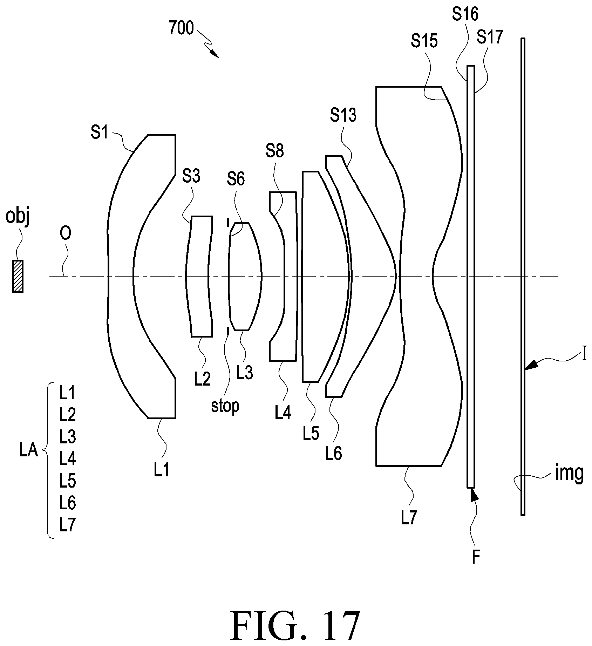

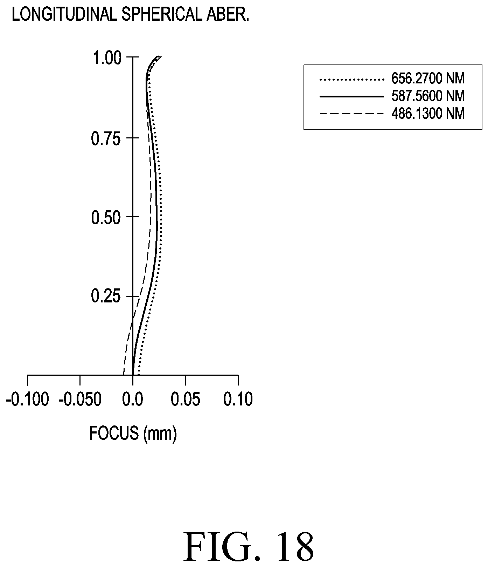

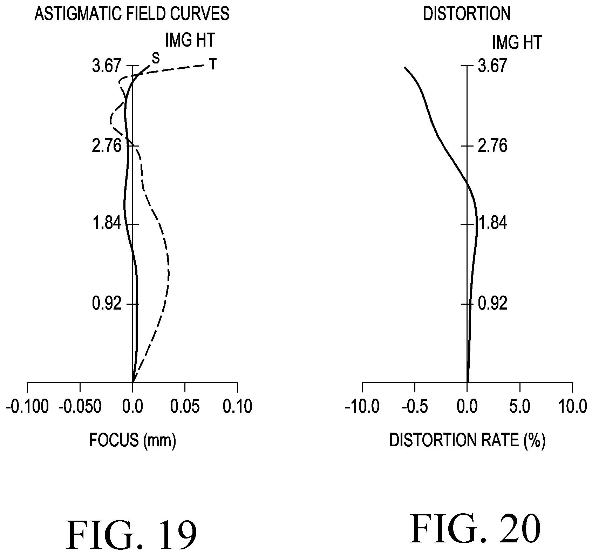

FIG. 17 is a diagram illustrating the imaging device 700 and/or the lens assembly LA according to an embodiment of the disclosure. FIG. 18 is a graph illustrating spherical aberration of the lens assembly LA of FIG. 17 according to an embodiment of the disclosure. FIG. 19 is a graph illustrating astigmatism of the lens assembly LA of FIG. 17 according to an embodiment of the disclosure. FIG. 20 is a graph illustrating distortion of the lens assembly LA of FIG. 17 according to an embodiment of the disclosure.

According to an embodiment, the imaging device 700 and/or the lens assembly LA thereof in FIG. 17 may implement an FOV of approximately 121.5 degrees, while having a focal length of approximately 2.18mm and an F-number of approximately 2.18. In an embodiment, the imaging device 700 and/or the lens assembly LA thereof may satisfy at least some of the above-described condition(s), be manufactured to the specifications illustrated in the following [Table 13], and have the aspherical coefficients of [Table 14], [Table 15], and [Table 16].

**[Table 13]**

| Lens surface (Surf) | Radius of curvature (Radius) | Thickness (Thick) | Focal length (EFL) | Refractive index (nd) | Abbe number (vd) |
|---|---|---|---|---|---|
| obj | infinity | infinity | | | |
| S1* | -3.94245 | 0.41377 | -4.442 | 1.54397 | 55.93 |
| S2* | 6.47455 | 0.75594 | | | |
| S3* | 2.44585 | 0.38773 | 8.324 | 1.68893 | 31.16 |
| S4* | 3.98892 | 0.28919 | | | |
| stop | infinity | 0.01000 | | | |
| S6* | 7.10568 | 0.53207 | 3.195 | 1.59201 | 67.02 |
| S7* | -2.50603 | 0.33214 | | | |
| S8* | 8.74045 | 0.18000 | -7.093 | 1.66075 | 20.38 |
| S9* | 3.02590 | 0.09247 | | | |
| S10* | 18.66280 | 0.72068 | 5.581 | 1.54397 | 55.93 |
| S11* | -3.57652 | 0.03257 | | | |
| S12* | -3.32517 | 0.63591 | 2.367 | 1.54397 | 55.93 |
| S13* | -0.99086 | 0.03000 | | | |
| S14* | 1.89720 | 0.48542 | -2.424 | 1.61443 | 25.96 |
| S15* | 0.75306 | 0.52921 | | | |
| S16 | infinity | 0.11 | infinity | 1.51680 | 64.2 |
| S17 | infinity | 0.69434 | | | |
| img | infinity | 0 | | | |

**[Table 14]**

| Lens surface (Surf) | S1 | S2 | S3 | S4 | S6 |
|---|---|---|---|---|---|
| Radius of curvature (Radius) | -3.94245E+00 | 6.47455E+00 | 2.44585E+00 | 3.98892E+00 | 7.10568E+00 |
| k(Conic) | -6.30673E+01 | 7.21549E+00 | -5.96254E+00 | -7.23879E+00 | -6.80001E+00 |
| A(4th)/C4 | 8.47280E-01 | 1.65623E-02 | -4.35132E-02 | 2.82793E-03 | -4.22892E-04 |
| B(6th)/C5 | -1.40456E-01 | -4.98921E-04 | -6.01093E-03 | 1.61834E-03 | 1.37575E-04 |
| C(8th)/C6 | 3.39944E-02 | 2.26247E-05 | 2.19621E-03 | 9.54198E-04 | 1.87455E-05 |
| D(10th)/C7 | -9.49132E-03 | -1.15425E-06 | 2.75129E-04 | 1.33179E-04 | 1.75928E-05 |
| E(12th)/C8 | 3.33810E-03 | 5.13969E-08 | -4.96284E-05 | 3.71944E-05 | -1.11110E-05 |
| F(14th)/C9 | -8.72010E-04 | -2.26295E-09 | -3.47985E-05 | -3.15036E-06 | 2.16940E-06 |
| G(16th)/C10 | 3.55418E-04 | 7.31259E-11 | 4.37738E-06 | 2.34031E-06 | -2.00215E-07 |
| H(18th)/C11 | -7.48240E-05 | -1.28269E-12 | -1.45209E-06 | -3.23749E-06 | 9.08328E-09 |
| J(20th)/C12 | 3.05303E-06 | 9.00007E-15 | -4.62822E-07 | 2.93172E-06 | -1.65176E-10 |
| K(22th)/C13 | 0.00000E+00 | 0.00000E+00 | 0.00000E+00 | 0.00000E+00 | 0.00000E+00 |
| L(24th)/C14 | 0.00000E+00 | 0.00000E+00 | 0.00000E+00 | 0.00000E+00 | 0.00000E+00 |
| M(26th)/C15 | 0.00000E+00 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 | 0.00000E+00 |

**[Table 15]**

| Lens surface (Surf) | S7 | S8 | S9 | S10 | S11 |
|---|---|---|---|---|---|
| Radius of curvature (Radius) | -2.50603E+00 | 8.74045E+00 | 3.02590E+00 | 1.86628E+01 | -3.57652E+00 |
| k(Conic) | -5.59413E-01 | -9.02602E-01 | -2.79975E+01 | -6.08697E+01 | 7.47792E-01 |
| A(4th)/C4 | -2.27785E-02 | -3.33036E-02 | -1.63536E-02 | -6.00596E-03 | -6.88428E-03 |
| B(6th)/C5 | -2.53655E-04 | 9.31677E-04 | 5.91048E-04 | -1.14685E-04 | 1.22346E-03 |
| C(8th)/C6 | -3.52703E-05 | -9.37219E-05 | 4.17495E-05 | 9.30661E-05 | -1.89472E-04 |
| D(10th)/C7 | 1.23701E-05 | 3.96816E-06 | -1.92663E-05 | -1.17618E-05 | 1.69524E-05 |
| E(12th)/C8 | -2.59244E-06 | 1.10863E-06 | 4.34979E-06 | 8.30646E-07 | -2.37322E-07 |
| F(14th)/C9 | 7.57243E-07 | -2.79293E-07 | -7.02739E-07 | -3.79021E-08 | -1.63014E-07 |
| G(16th)/C10 | -5.12105E-08 | 3.33302E-08 | 8.20708E-08 | 1.17560E-09 | 2.41510E-08 |
| H(18th)/C11 | 0.00000E+00 | -2.31649E-09 | -6.82940E-09 | -2.52567E-11 | -1.84596E-09 |
| J(20th)/C12 | 0.00000E+00 | 6.92148E-11 | 3.98050E-10 | 3.75618E-13 | 8.90503E-11 |
| K(22th)/C13 | 0.00000E+00 | 0.00000E+00 | -1.58283E-11 | -3.79293E-15 | -2.85064E-12 |
| L(24th)/C14 | 0.00000E+00 | 0.00000E+00 | 4.08427E-13 | 2.58311E-17 | 6.08148E-14 |
| M(26th)/C15 | 0.00000E+00 | 0.00000E+00 | -6.15367E-15 | 5.24313E-19 | -9.89202E-16 |
| N(28th)/C16 | 0.00000E+00 | 0.00000E+00 | 3.94650E-17 | 1.01644E-19 | 1.88351E-16 |
| O(30th)/C17 | 0.00000E+00 | 0.00000E+00 | 0.00000E+00 | 0.00000E+00 | 1.89363E-16 |

**[Table 16]**

| Lens surface (Surf) | S12 | S13 | S14 | S15 |
|---|---|---|---|---|
| Radius of curvature (Radius) | -3.32517E+00 | -9.90858E-01 | 1.89720E+00 | 7.53059E-01 |
| k(Conic) | 2.24706E-01 | -2.06097E+00 | -1.49811E+01 | -4.02969E+00 |
| A(4th)/C4 | -8.34643E-04 | 6.98237E-03 | -1.99978E-03 | -8.20662E-04 |
| B(6th)/C5 | 1.28942E-03 | -3.98088E-04 | -1.00852E-04 | 7.10592E-06 |
| C(8th)/C6 | -2.23238E-04 | 2.75966E-05 | 7.33678E-06 | -6.71489E-08 |
| D(10th)/C7 | 2.90296E-05 | -1.72119E-06 | -2.63739E-07 | 7.00859E-10 |
| E(12th)/C8 | -2.80274E-06 | 1.87555E-07 | 5.67026E-09 | -8.47904E-12 |
| F(14th)/C9 | 1.89810E-07 | -1.88074E-08 | -7.76702E-11 | 9.05750E-14 |
| G(16th)/C10 | -8.95756E-09 | 1.17668E-09 | 7.03091E-13 | -7.19350E-16 |
| H(18th)/C11 | 2.97270E-10 | -4.68247E-11 | -4.26462E-15 | 1.18119E-18 |
| J(20th)/C12 | -6.97575E-12 | 1.23712E-12 | 1.60733E-17 | -3.96538E-18 |
| K(22th)/C13 | 1.15265E-13 | -2.23419E-14 | 3.48978E-19 | -1.49925E-18 |
| L(24th)/C14 | -1.25701E-15 | 2.98515E-16 | -3.12238E-19 | 1.55854E-19 |
| M(26th)/C15 | 2.08142E-16 | -1.09342E-16 | -8.13152E-19 | -1.57972E-18 |
| N(28th)/C16 | 1.74336E-16 | 1.62032E-16 | 0.00000E+00 | -2.69981E-18 |
| O(30th)/C17 | -5.00224E-17 | 1.83935E-16 | 0.00000E+00 | -9.60535E-19 |

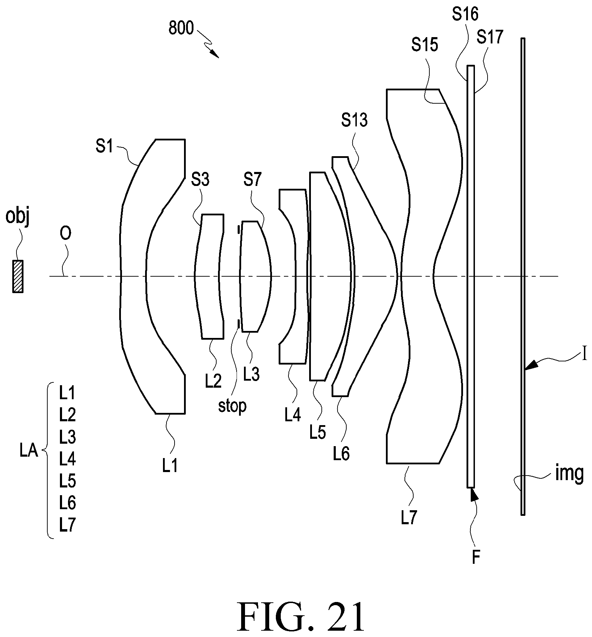

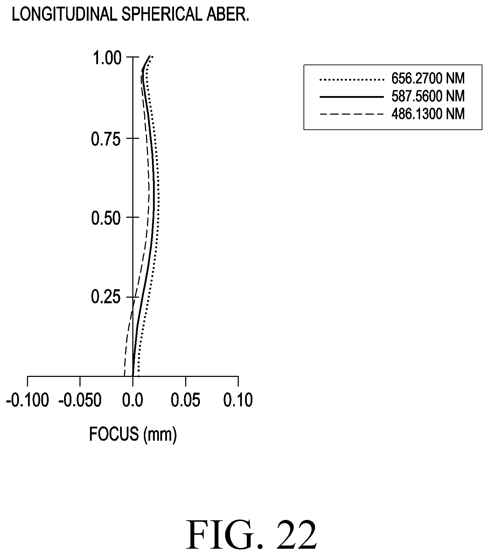

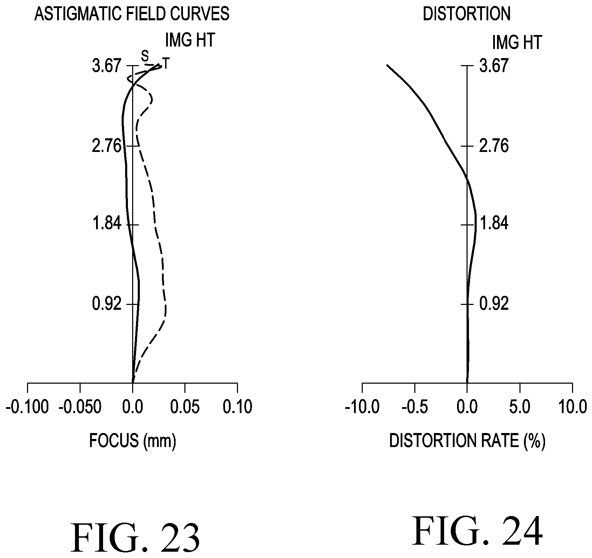

FIG. 21 is a diagram illustrating the imaging device 800 and/or the lens assembly LA according to an embodiment of the disclosure. FIG. 22 is a graph illustrating spherical aberration of the lens assembly LA of FIG. 21 according to an embodiment of the disclosure. FIG. 23 is a graph illustrating astigmatism of the lens assembly LA of FIG. 21 according to an embodiment of the disclosure. FIG. 24 is a graph illustrating distortion of the lens assembly LA of FIG. 21 according to an embodiment of the disclosure.

According to an embodiment, the imaging device 800 and/or the lens assembly LA thereof in FIG. 21 may implement an FOV of approximately 121.6 degrees, while having a focal length of approximately 2.22mm and an F-number of approximately 2.20. In an embodiment, the imaging device 800 and/or the lens assembly LA thereof may satisfy at least some of the above-described condition(s), be manufactured to the specifications illustrated in the following [Table 17], and have the aspherical coefficients of [Table 18], [Table 19], and [Table 20].

**[Table 17]**

| Lens surface (Surf) | Radius of curvature (Radius) | Thickness (Thick) | Focal length (EFL) | Refractive index (nd) | Abbe number (vd) |
|---|---|---|---|---|---|
| obj | infinity | infinity | | | |
| S1* | -3.977 | 0.385 | -4.46 | 1.544 | 55.9 |
| S2* | 6.451 | 0.749 | | | |
| S3* | 2.325 | 0.371 | 8.10 | 1.689 | 31.2 |
| S4* | 3.727 | 0.317 | | | |
| stop | infinity | 0.012 | | | |
| S6* | 7.831 | 0.476 | 3.20 | 1.589 | 61.3 |
| S7* | -2.427 | 0.381 | | | |
| S8* | 8.601 | 0.180 | -6.95 | 1.671 | 19.2 |
| S9* | 2.998 | 0.060 | | | |
| S10* | 33.472 | 0.629 | 7.65 | 1.544 | 55.9 |
| S11* | -4.721 | 0.056 | | | |
| S12* | -2.838 | 0.678 | 2.08 | 1.544 | 55.9 |
| S13* | -0.877 | 0.035 | | | |
| S14* | 1.998 | 0.497 | -2.40 | 1.635 | 24.0 |
| S15* | 0.781 | 0.529 | | | |
| S16 | infinity | 0.110 | infinity | 1.517 | 64.2 |
| S17 | infinity | 0.734 | | | |
| img | infinity | 0.01869 | | | |

**[Table 18]**

| Lens surface (Surf) | S1 | S2 | S3 | S4 | S6 |
|---|---|---|---|---|---|
| Radius of curvature (Radius) | -3.97729E+00 | 6.45077E+00 | 2.32514E+00 | 3.72704E+00 | 7.83134E+00 |
| k(Conic) | -6.49672E+01 | 5.90228E+00 | -5.97342E+00 | -8.45690E+00 | -7.67324E+00 |
| A(4th)/C4 | 8.54335E-01 | 1.73321E-02 | -4.48876E-02 | 1.23604E-03 | -1.20476E-03 |
| B(6th)/C5 | -1.48958E-01 | -5.50914E-04 | -6.81250E-03 | 1.11533E-03 | 1.34459E-04 |
| C(8th)/C6 | 3.80183E-02 | 2.55556E-05 | 2.34409E-03 | 8.57161E-04 | 3.84742E-05 |
| D(10th)/C7 | -1.03089E-02 | -1.33943E-06 | 3.02248E-04 | 1.32546E-04 | 1.72857E-05 |
| E(12th)/C8 | 3.80016E-03 | 5.70567E-08 | -6.94605E-05 | 2.43155E-05 | -7.56659E-06 |
| F(14th)/C9 | -1.01392E-03 | -2.20818E-09 | -3.21347E-05 | 6.36750E-07 | 8.82338E-07 |
| G(16th)/C10 | 3.98187E-04 | 6.54815E-11 | -2.27905E-07 | 9.49134E-07 | -3.34517E-08 |
| H(18th)/C11 | -1.19820E-04 | -1.10999E-12 | 1.95883E-06 | -5.97625E-07 | 0.00000E+00 |
| J(20th)/C12 | 6.37064E-06 | 7.69610E-15 | -6.56264E-07 | 5.37802E-07 | 0.00000E+00 |
| K(22th)/C13 | 0.00000E+00 | 0.00000E+00 | 0.00000E+00 | 0.00000E+00 | 0.00000E+00 |
| L(24th)/C14 | 0.00000E+00 | 0.00000E+00 | 0.00000E+00 | 0.00000E+00 | 0.00000E+00 |
| M(26th)/C15 | 0.00000E+00 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 | 0.00000E+00 |

**[Table 19]**

| Lens surface (Surf) | S7 | S8 | S9 | S10 | S11 |
|---|---|---|---|---|---|
| Radius of curvature (Radius) | -2.42660E+00 | 8.60144E+00 | 2.99765E+00 | 3.34722E+01 | -4.72148E+00 |
| k(Conic) | -1.13412E+00 | 1.38029E+01 | -2.42123E+01 | -1.00000E+01 | 1.99734E+00 |
| A(4th)/C4 | -2.15617E-02 | -2.96301E-02 | -1.43198E-02 | -5.47990E-03 | -7.31014E-03 |
| B(6th)/C5 | -2.67660E-04 | 7.70583E-04 | 3.57175E-04 | -2.81062E-04 | 1.01281E-03 |
| C(8th)/C6 | -1.83208E-05 | -9.35791E-05 | 6.38339E-05 | 1.30159E-04 | -8.19958E-05 |
| D(10th)/C7 | 1.02536E-05 | 3.67911E-06 | -1.86477E-05 | -1.57622E-05 | 7.20624E-07 |
| E(12th)/C8 | -3.18580E-06 | 1.50425E-06 | 3.05584E-06 | 1.06782E-06 | 1.96313E-07 |
| F(14th)/C9 | 1.78101E-06 | -3.37485E-07 | -3.38357E-07 | -4.62775E-08 | 6.17015E-09 |
| G(16th)/C10 | -1.94352E-07 | 3.46643E-08 | 2.51463E-08 | 1.35469E-09 | -2.43351E-09 |
| H(18th)/C11 | 0.00000E+00 | -1.91779E-09 | -1.21982E-09 | -2.73997E-11 | 1.91211E-10 |
| J(20th)/C12 | 0.00000E+00 | 4.46250E-11 | 3.67903E-11 | 3.83328E-13 | -8.21135E-12 |
| K(22th)/C13 | 0.00000E+00 | 0.00000E+00 | -6.23770E-13 | -3.83926E-15 | 2.18791E-13 |
| L(24th)/C14 | 0.00000E+00 | 0.00000E+00 | 4.53142E-15 | -8.01293E-18 | -4.21124E-15 |
| M(26th)/C15 | 0.00000E+00 | 0.00000E+00 | 0.00000E+00 | 1.02923E-16 | -1.84768E-16 |
| N(28th)/C16 | 0.00000E+00 | 0.00000E+00 | 0.00000E+00 | 1.05771E-16 | 2.31206E-17 |
| O(30th)/C17 | 0.00000E+00 | 0.00000E+00 | 0.00000E+00 | 0.00000E+00 | -1.02755E-16 |

**[Table 20]**

| Lens surface (Surf) | S12 | S13 | S14 | S15 |
|---|---|---|---|---|
| Radius of curvature (Radius) | -2.83833E+00 | -8.77217E-01 | 1.99783E+00 | 7.80851E-01 |
| k(Conic) | -9.09870E-02 | -2.15232E+00 | -1.15712E+01 | -4.71807E+00 |
| A(4th)/C4 | -1.22223E-03 | 7.07151E-03 | -1.55487E-03 | -5.22167E-04 |
| B(6th)/C5 | 1.06102E-03 | -6.42859E-04 | -8.49799E-06 | 3.87923E-06 |
| C(8th)/C6 | -6.21820E-05 | 8.68146E-05 | 5.60137E-07 | -3.63603E-08 |
| D(10th)/C7 | -4.51407E-06 | -1.00106E-05 | -1.49323E-08 | 2.78989E-10 |
| E(12th)/C8 | 9.89644E-07 | 9.54925E-07 | 2.46381E-10 | -1.58484E-12 |
| F(14th)/C9 | -7.97395E-08 | -6.89292E-08 | -2.56342E-12 | 6.23611E-15 |
| G(16th)/C10 | 3.92007E-09 | 3.57617E-09 | 1.72823E-14 | -1.82298E-17 |
| H(18th)/C11 | -1.30619E-10 | -1.31854E-10 | -7.64295E-17 | -1.16806E-18 |
| J(20th)/C12 | 3.05352E-12 | 3.44604E-12 | -1.00458E-18 | 1.35059E-18 |
| K(22th)/C13 | -5.03800E-14 | -6.32435E-14 | -4.08482E-19 | -5.28601E-19 |
| L(24th)/C14 | 5.04367E-16 | 1.07457E-15 | 2.50722E-19 | -3.78793E-18 |
| M(26th)/C15 | -2.76309E-17 | -4.90263E-16 | 0.00000E+00 | 0.00000E+00 |
| N(28th)/C16 | -1.31282E-16 | -7.84353E-18 | 0.00000E+00 | 0.00000E+00 |
| O(30th)/C17 | -2.90731E-17 | -3.84329E-16 | 0.00000E+00 | 0.00000E+00 |

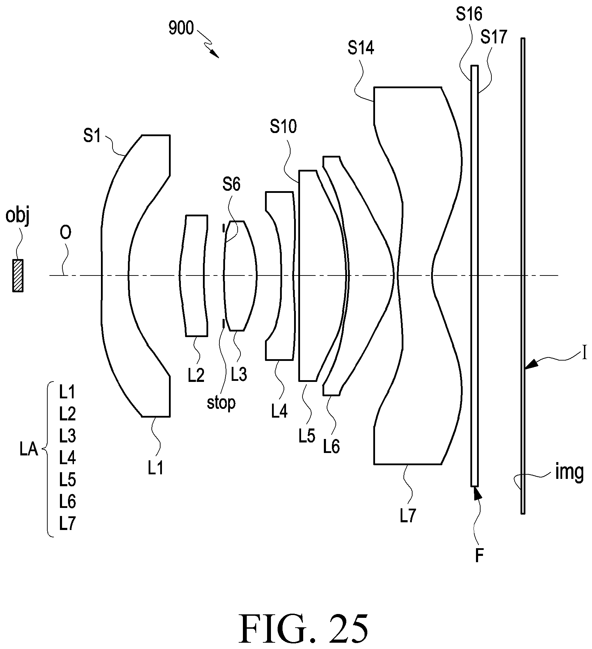

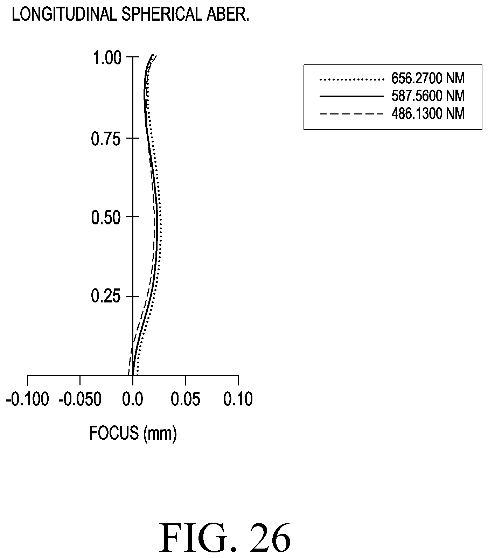

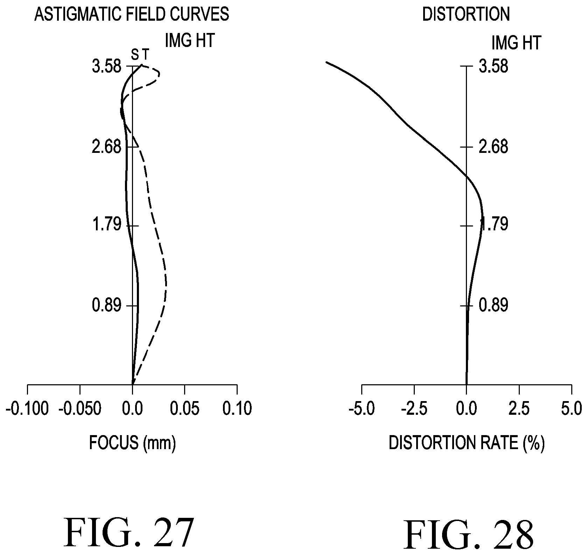

FIG. 25 is a diagram illustrating the imaging device 900 and/or the lens assembly LA according to an embodiment of the disclosure. FIG. 26 is a graph illustrating spherical aberration of the lens assembly LA of FIG. 25 according to an embodiment of the disclosure. FIG. 27 is a graph illustrating astigmatism of the lens assembly LA of FIG. 25 according to an embodiment of the disclosure. FIG. 28 is a graph illustrating distortion of the lens assembly LA of FIG. 25 according to an embodiment of the disclosure.

According to an embodiment, the imaging device 900 and/or the lens assembly LA thereof in FIG. 25 may implement an FOV of approximately 119.7 degrees, while having a focal length of approximately 2.21mm and an F-number of approximately 2.19. In an embodiment, the imaging device 900 and/or the lens assembly LA thereof may satisfy at least some of the above-described condition(s), be manufactured to the specifications illustrated in the following [Table 21], and have the aspherical coefficients of [Table 22], [Table 23], and [Table 24].

**[Table 21]**

| Lens surface (Surf) | Radius of curvature (Radius) | Thickness (Thick) | Focal length (EFL) | Refractive index (nd) | Abbe number (vd) |
|---|---|---|---|---|---|
| obj | infinity | infinity | | | |
| S1* | -4.132 | 0.390 | -4.65 | 1.544 | 55.9 |
| S2* | 6.730 | 0.761 | | | |
| S3* | 2.504 | 0.345 | 8.86 | 1.689 | 31.2 |
| S4* | 4.009 | 0.304 | | | |
| stop | infinity | 0.005 | | | |
| S6* | 7.429 | 0.497 | 3.19 | 1.592 | 67.0 |
| S7* | -2.474 | 0.354 | | | |
| S8* | 9.760 | 0.180 | -6.58 | 1.661 | 20.4 |
| S9* | 2.985 | 0.086 | | | |
| S10* | 15.289 | 0.706 | 5.51 | 1.544 | 55.9 |
| S11* | -3.667 | 0.036 | | | |
| S12* | -2.841 | 0.683 | 2.00 | 1.544 | 55.9 |
| S13* | -0.855 | 0.033 | | | |
| S14* | 2.387 | 0.507 | -2.03 | 1.614 | 26.0 |
| S15* | 0.752 | 0.528 | | | |
| S16 | infinity | 0.110 | infinity | 1.517 | 64.2 |
| S17 | infinity | 0.698 | | | |
| img | infinity | 0 | | | |

**[Table 22]**

| Lens surface (Surf) | S1 | S2 | S3 | S4 | S6 |
|---|---|---|---|---|---|
| Radius of curvature (Radius) | -4.13222E+00 | 6.73016E+00 | 2.50437E+00 | 4.00885E+00 | 7.42924E+00 |
| k(Conic) | -6.77415E+01 | 6.37406E+00 | -8.35744E+00 | -1.00000E+01 | -6.10310E-01 |
| A(4th)/C4 | 9.12187E-01 | 1.66155E-02 | -4.21612E-02 | -1.07136E-03 | -5.52638E-04 |
| B(6th)/C5 | -1.41652E-01 | -5.38436E-04 | -5.62569E-03 | 1.63914E-03 | 1.29325E-04 |
| C(8th)/C6 | 3.90462E-02 | 3.04985E-05 | 1.92759E-03 | 1.02268E-03 | 2.13590E-05 |
| D(10th)/C7 | -9.89916E-03 | -2.23199E-06 | 2.18354E-04 | 1.30315E-04 | 1.52067E-05 |
| E(12th)/C8 | 4.42661E-03 | 1.46569E-07 | -5.01787E-05 | 3.58748E-05 | -6.28787E-06 |
| F(14th)/C9 | -8.37702E-04 | -7.53454E-09 | -1.25895E-05 | -3.67956E-07 | 3.11918E-06 |
| G(16th)/C10 | 5.55913E-04 | 2.58564E-10 | -1.79291E-06 | 2.96200E-06 | -3.01552E-06 |
| H(18th)/C11 | -1.24310E-04 | -5.35401E-12 | 1.80092E-06 | -2.76276E-06 | 8.35599E-07 |
| J(20th)/C12 | 3.03058E-05 | 6.02083E-14 | -2.86196E-06 | 2.43194E-06 | 0.00000E+00 |
| K(22th)/C13 | -2.41388E-05 | -2.85254E-16 | 0.00000E+00 | 0.00000E+00 | 0.00000E+00 |
| L(24th)/C14 | 0.00000E+00 | 0.00000E+00 | 0.00000E+00 | 0.00000E+00 | 0.00000E+00 |
| M(26th)/C15 | 0.00000E+00 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 | 0.00000E+00 |

**[Table 23]**

| Lens surface (Surf) | S7 | S8 | S9 | S10 | S11 |
|---|---|---|---|---|---|
| Radius of curvature (Radius) | -2.47424E+00 | 9.75998E+00 | 2.98544E+00 | 1.52893E+01 | -3.66685E+00 |
| k(Conic) | -1.03061E+00 | 7.19686E+00 | -2.97262E+01 | -5.37809E+01 | 2.34364E-01 |
| A(4th)/C4 | -2.15203E-02 | -3.20724E-02 | -1.65105E-02 | -8.26653E-03 | -6.55600E-03 |
| B(6th)/C5 | -2.70846E-04 | 9.48403E-04 | 6.62174E-04 | 1.04355E-05 | 1.30731E-03 |
| C(8th)/C6 | -1.97847E-05 | -1.20224E-04 | 2.62237E-05 | 8.80299E-05 | -1.99775E-04 |
| D(10th)/C7 | 8.13775E-06 | 1.12359E-05 | -1.40746E-05 | -6.54366E-06 | 1.57676E-05 |
| E(12th)/C8 | -2.52975E-06 | -8.80670E-07 | 2.75232E-06 | -7.35889E-07 | 4.07744E-08 |
| F(14th)/C9 | 6.48736E-07 | 2.02462E-07 | -3.98758E-07 | 1.86204E-07 | -1.97594E-07 |
| G(16th)/C10 | -7.95406E-09 | -3.27261E-08 | 4.46265E-08 | -1.79795E-08 | 2.88176E-08 |
| H(18th)/C11 | 0.00000E+00 | 2.07101E-09 | -3.59427E-09 | 1.04001E-09 | -2.34777E-09 |
| J(20th)/C12 | 0.00000E+00 | -4.21988E-11 | 1.92915E-10 | -3.94723E-11 | 1.24157E-10 |
| K(22th)/C13 | 0.00000E+00 | 0.00000E+00 | -6.34662E-12 | 1.00256E-12 | -4.41960E-12 |
| L(24th)/C14 | 0.00000E+00 | 0.00000E+00 | 1.08294E-13 | -1.67020E-14 | 1.05096E-13 |
| M(26th)/C15 | 0.00000E+00 | 0.00000E+00 | -4.27387E-16 | 1.67874E-16 | -1.37234E-15 |
| N(28th)/C16 | 0.00000E+00 | 0.00000E+00 | -1.16010E-17 | -3.00866E-18 | 3.40006E-16 |
| O(30th)/C17 | 0.00000E+00 | 0.00000E+00 | 0.00000E+00 | 0.00000E+00 | 2.74886E-16 |

**[Table 24]**

| Lens surface (Surf) | S12 | S13 | S14 | S15 |
|---|---|---|---|---|
| Radius of curvature (Radius) | -2.84055E+00 | -8.54743E-01 | 2.38704E+00 | 7.52232E-01 |
| k(Conic) | -2.96336E-01 | -2.04221E+00 | -1.48329E+01 | -4.43537E+00 |
| A(4th)/C4 | -1.43562E-03 | 8.61433E-03 | -2.41982E-03 | -6.35248E-04 |
| B(6th)/C5 | 1.51763E-03 | -7.29688E-04 | -2.17790E-05 | 5.90261E-06 |
| C(8th)/C6 | -2.21961E-04 | 8.49848E-05 | 3.73008E-06 | -5.49565E-08 |
| D(10th)/C7 | 2.23157E-05 | -8.69781E-06 | -2.00939E-07 | 3.33077E-10 |
| E(12th)/C8 | -1.68223E-06 | 8.23416E-07 | 6.60287E-09 | -5.17455E-13 |
| F(14th)/C9 | 8.41082E-08 | -6.38927E-08 | -1.48738E-10 | -1.25562E-14 |
| G(16th)/C10 | -1.81615E-09 | 3.62069E-09 | 2.37180E-12 | 1.50626E-16 |
| H(18th)/C11 | -7.53984E-11 | -1.44991E-10 | -2.65588E-14 | -5.37442E-19 |
| J(20th)/C12 | 7.97429E-12 | 4.08602E-12 | 2.04369E-16 | 7.94093E-20 |
| K(22th)/C13 | -3.27917E-13 | -8.03160E-14 | 1.09437E-18 | 1.01729E-18 |
| L(24th)/C14 | 8.08087E-15 | 8.22862E-16 | -1.04111E-18 | 7.68259E-19 |
| M(26th)/C15 | 5.08244E-16 | -3.98187E-16 | -2.36492E-18 | -1.06260E-18 |
| N(28th)/C16 | 1.58898E-16 | -2.17052E-17 | 0.00000E+00 | 3.67612E-19 |
| O(30th)/C17 | -6.15907E-17 | -1.42464E-16 | 0.00000E+00 | 1.65510E-18 |

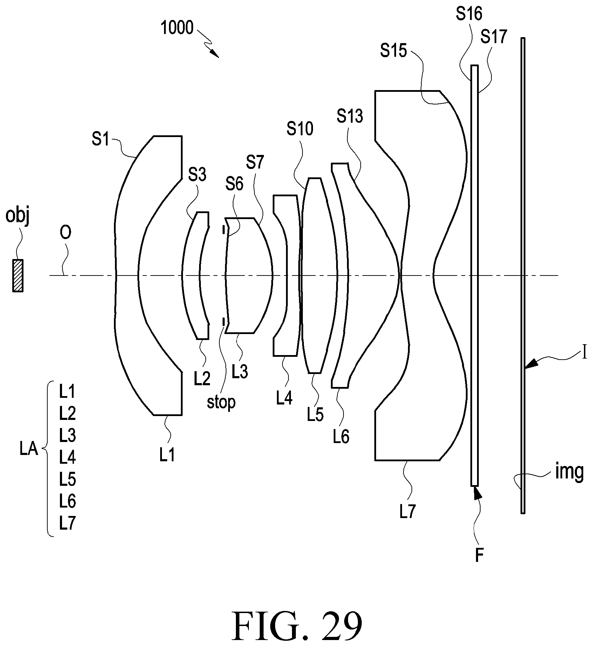

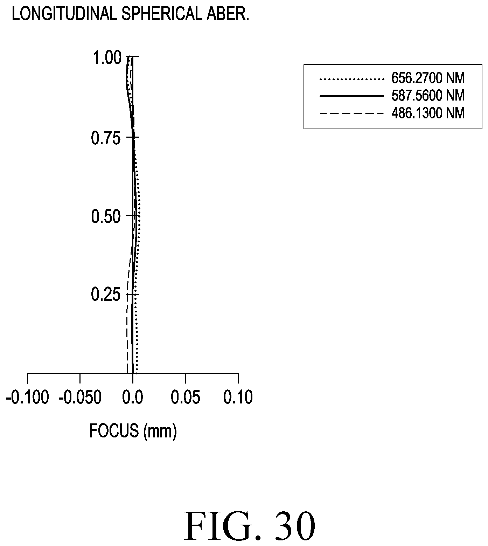

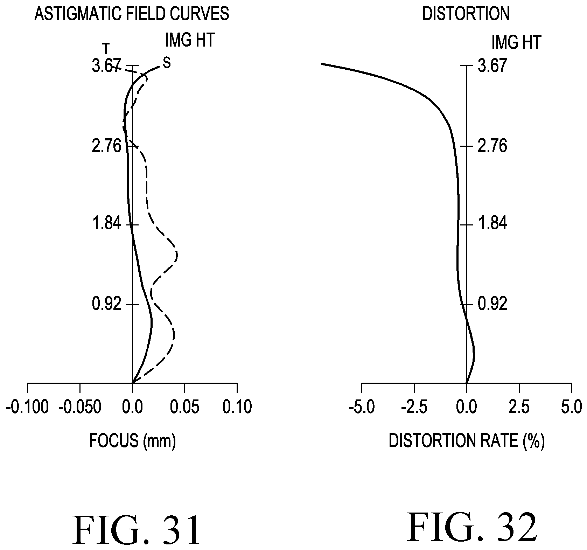

FIG. 29 is a diagram illustrating the imaging device 1000 and/or the lens assembly LA according to an embodiment of the disclosure. FIG. 30 is a graph illustrating spherical aberration of the lens assembly LA of FIG. 29 according to an embodiment of the disclosure. FIG. 31 is a graph illustrating astigmatism of the lens assembly LA of FIG. 29 according to an embodiment of the disclosure. FIG. 32 is a graph illustrating distortion of the lens assembly LA of FIG. 29 according to an embodiment of the disclosure.

According to an embodiment, the imaging device 1000 and/or the lens assembly LA thereof in FIG. 29 may implement an FOV of approximately 125.9 degrees, while having a focal length of approximately 2.03mm and an F-number of approximately 1.98. In an embodiment, the imaging device 1000 and/or the lens assembly LA thereof may satisfy at least some of the above-described condition(s), be manufactured to the specifications illustrated in the following [Table 25], and have the aspherical coefficients of [Table 26], [Table 27], and [Table 28].

**[Table 25]**

| Lens surface (Surf) | Radius of curvature (Radius) | Thickness (Thick) | Focal length (EFL) | Refractive index (nd) | Abbe number (vd) |
|---|---|---|---|---|---|
| obj | infinity | infinity | | | |
| S1* | -3.463 | 0.341 | -3.84 | 1.544 | 56.0 |
| S2* | 5.451 | 0.658 | | | |
| S3* | 1.679 | 0.258 | 8.32 | 1.567 | 37.4 |
| S4* | 2.463 | 0.366 | | | |
| stop | infinity | 0.043 | | | |
| S6* | 6.129 | 0.704 | 3.19 | 1.544 | 56.0 |
| S7* | -2.319 | 0.230 | | | |
| S8* | 9.334 | 0.180 | -6.23 | 1.671 | 19.2 |
| S9* | 2.864 | 0.040 | | | |
| S10* | 10.731 | 0.549 | 7.46 | 1.544 | 56.0 |
| S11* | -6.407 | 0.171 | | | |
| S12* | -5.139 | 0.766 | 1.94 | 1.544 | 56.0 |
| S13* | -0.920 | 0.022 | | | |
| S14* | 1.779 | 0.493 | -2.39 | 1.635 | 24.0 |
| S15* | 0.732 | 0.531 | | | |
| S16 | infinity | 0.110 | infinity | 1.517 | 64.2 |
| S17 | infinity | 0.698 | | | |
| img | infinity | 0 | | | |

**[Table 26]**

| Lens surface (Surf) | S1 | S2 | S3 | S4 | S6 |
|---|---|---|---|---|---|
| Radius of curvature (Radius) | -3.46342E+00 | 5.45083E+00 | 1.67948E+00 | 2.46322E+00 | 6.12927E+00 |
| k(Conic) | -5.01453E+01 | 6.89607E+00 | -2.04363E+00 | 1.67864E+00 | -8.69197E+00 |
| A(4th)/C4 | 9.27338E-01 | 1.98040E-02 | -2.55595E-02 | 6.60783E-03 | 1.52533E-03 |
| B(6th)/C5 | -1.38723E-01 | -8.67044E-04 | -7.67674E-03 | -2.95370E-04 | -6.81527E-04 |
| C(8th)/C6 | 5.06499E-02 | 4.76630E-05 | 4.00742E-03 | 1.32144E-04 | 3.92603E-05 |
| D(10th)/C7 | -1.31828E-02 | -1.08340E-06 | 8.62602E-04 | -1.57221E-05 | -6.00671E-05 |
| E(12th)/C8 | 6.54949E-03 | -2.71693E-07 | -1.75571E-04 | 1.50551E-05 | 2.00860E-05 |
| F(14th)/C9 | -1.84416E-03 | 4.28722E-08 | -1.12026E-04 | -6.39317E-06 | -1.00069E-05 |
| G(16th)/C10 | 8.59096E-04 | -3.29785E-09 | -2.51856E-06 | 2.90156E-06 | 1.16657E-05 |
| H(18th)/C11 | -3.51198E-04 | 1.55792E-10 | 1.83691E-05 | -6.16806E-07 | -4.42186E-06 |
| J(20th)/C12 | 1.05557E-04 | -4.68844E-12 | 1.30651E-07 | 5.06276E-08 | 0.00000E+00 |
| K(22th)/C13 | -5.06854E-05 | 8.77804E-14 | 0.00000E+00 | 0.00000E+00 | 0.00000E+00 |
| L(24th)/C14 | -7.38134E-06 | -9.33996E-16 | 0.00000E+00 | 0.00000E+00 | 0.00000E+00 |
| M(26th)/C15 | 9.74502E-07 | 1.21973E-18 | 0.00000E+00 | 0.00000E+00 | 0.00000E+00 |
| N(28th)/C16 | 0.00000E+00 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 | 0.00000E+00 |

**[Table 27]**

| Lens surface (Surf) | S7 | S8 | S9 | S10 | S11 |
|---|---|---|---|---|---|
| Radius of curvature (Radius) | -2.31908E+00 | 9.33376E+00 | 2.86354E+00 | 1.07313E+01 | -6.40678E+00 |
| k(Conic) | 3.81581E-01 | 1.80365E+01 | -2.77450E+01 | -1.50000E+01 | 4.20324E+00 |
| A(4th)/C4 | -9.42791E-02 | -5.21121E-02 | -2.13179E-01 | -8.65062E-03 | -1.04030E-01 |
| B(6th)/C5 | -1.23893E-03 | 1.62526E-03 | 3.51033E-02 | 1.63261E-03 | 2.07268E-02 |
| C(8th)/C6 | -1.09057E-03 | -6.67048E-05 | -4.39076E-03 | -3.56519E-04 | 7.02581E-03 |
| D(10th)/C7 | 9.36556E-05 | -2.46831E-05 | 2.13887E-03 | 5.68630E-05 | 2.25049E-03 |
| E(12th)/C8 | -6.61813E-05 | 5.74325E-06 | -1.22431E-03 | -6.38433E-06 | -3.30269E-04 |
| F(14th)/C9 | 1.15497E-05 | -4.85403E-07 | 2.20005E-04 | 5.18558E-07 | 2.35608E-03 |
| G(16th)/C10 | -6.45870E-06 | 1.46342E-08 | 2.43282E-05 | -2.99063E-08 | -1.26722E-04 |
| H(18th)/C11 | 7.70711E-06 | 0.00000E+00 | -4.81805E-06 | 1.14741E-09 | -1.68725E-04 |
| J(20th)/C12 | -6.95330E-06 | 0.00000E+00 | -1.60733E-05 | -2.58987E-11 | 2.18548E-04 |
| K(22th)/C13 | 0.00000E+00 | 0.00000E+00 | 0.00000E+00 | 2.57816E-13 | -1.37602E-05 |
| L(24th)/C14 | 0.00000E+00 | 0.00000E+00 | 0.00000E+00 | 0.00000E+00 | 7.44489E-05 |
| M(26th)/C15 | 0.00000E+00 | 0.00000E+00 | 0.00000E+00 | 0.00000E+00 | -3.53594E-06 |
| N(28th)/C16 | 0.00000E+00 | 0.00000E+00 | 0.00000E+00 | 0.00000E+00 | 2.93427E-05 |
| O(30th)/C17 | 0.00000E+00 | 0.00000E+00 | 0.00000E+00 | 0.00000E+00 | 5.44964E-06 |

**[Table 28]**

| Lens surface (Surf) | S12 | S13 | S14 | S15 |
|---|---|---|---|---|
| Radius of curvature (Radius) | -5.13885E+00 | -9.19942E-01 | 1.77864E+00 | 7.31520E-01 |
| k(Conic) | 1.21000E+00 | -1.80156E+00 | -1.86274E+01 | -3.93607E+00 |
| A(4th)/C4 | -1.98388E-04 | 3.14527E-01 | 1.79362E-03 | -8.87707E-04 |
| B(6th)/C5 | 1.84144E-04 | -1.79544E-02 | -4.60640E-04 | 1.31810E-05 |
| C(8th)/C6 | 8.87521E-05 | 2.36042E-02 | 4.78407E-05 | -2.87187E-07 |
| D(10th)/C7 | -3.04878E-05 | -2.54815E-03 | -3.99045E-06 | 5.36465E-09 |
| E(12th)/C8 | 4.94079E-06 | 3.85503E-03 | 2.50215E-07 | -7.69313E-11 |
| F(14th)/C9 | -5.46696E-07 | -2.09581E-03 | -1.16073E-08 | 8.31203E-13 |
| G(16th)/C10 | 4.49525E-08 | 5.08610E-04 | 3.97837E-10 | -6.75084E-15 |
| H(18th)/C11 | -2.78194E-09 | -9.33476E-04 | -1.00614E-11 | 4.14055E-17 |
| J(20th)/C12 | 1.28452E-10 | -4.82538E-05 | 1.86508E-13 | 5.67089E-19 |
| K(22th)/C13 | -4.34435E-12 | -1.10447E-05 | -2.49565E-15 | -1.20617E-18 |
| L(24th)/C14 | 1.04158E-13 | 5.61373E-05 | 2.13867E-17 | -2.50510E-18 |
| M(26th)/C15 | -1.84676E-15 | 0.00000E+00 | -2.48689E-18 | -1.42302E-18 |
| N(28th)/C16 | 4.20149E-16 | 0.00000E+00 | 7.19978E-20 | -1.74055E-18 |
| O(30th)/C17 | 3.36971E-18 | 0.00000E+00 | 1.30443E-19 | -1.65764E-18 |

Regarding the conditions presented through the above-described [Equations], values calculated from the lens data of the imaging devices 400, 500, 600, 700, 800, 900, and 1000 and/or the lens assemblies LA in FIGS. 5, 9, 13, 17, 21, 25, and/or 29 are exemplified in [Table 29] below.

**[Table 29]**

| Equation | Embodiment 1 | Embodiment 2 | Embodiment 3 | Embodiment 4 | Embodiment 5 | Embodiment 6 | Embodiment 7 |
|---|---|---|---|---|---|---|---|
| f1/f7 | 2.33 | 2.18 | 1.90 | 1.83 | 1.86 | 2.29 | 1.65 |
| (R6-R7)/(R6+R7) | 2.97 | 1.80 | 2.02 | 2.09 | 1.90 | 2.00 | 2.21 |
| f4/f5 | -1.75 | -1.01 | -1.18 | -1.27 | -0.91 | -1.19 | -0.88 |

As described above, the imaging devices 400, 500, 600, 700, 800, 900, and 1000 and/or the lens assembly LA according to the embodiment(s) of the disclosure may provide favorable wide-angle (or ultra-wide-angle) performance while being easy to miniaturize. In an embodiment, when a lens having a positive refractive power is a glass lens among the lenses disposed between the first lens (e.g., the first lens L1) on the object side and the first lens (e.g., the n^{th} lens) on the image sensor side, the performance deviation of the lens assembly LA caused by a temperature change may be suppressed. In an embodiment, when a lens having a positive refractive power is a glass lens including an aspherical surface among the lenses disposed between the first lens (e.g., the first lens L1) on the object side and the first lens (e.g., the n^{th} lens) on the image sensor side, control of field curvature may be facilitated. In an embodiment, when the above-described conditions regarding the ratio between the focal lengths of the first lens L1 and the n^{th} lens (e.g., the seventh lens L7), the ratio between the radii of curvature of the two lens surfaces of the third lens L3, and/or the ratio between the focal lengths of the fourth lens L4 and the fifth lens L5 are satisfied, the aberration control or field curvature control of the lens assembly LA may be easily performed, thereby improving optical performance. Accordingly, the imaging devices 400, 500, 600, 700, 800, 900, and 1000 and/or the lens assembly LA according to the embodiment(s) of the disclosure may be easily mounted on miniaturized electronic devices while providing wide-angle or ultra-wide-angle performance.

The effects obtainable in the disclosure are not limited to the effects mentioned above, and other effects not mentioned will be clearly understood by those skilled in the art from the description of the above-described embodiment(s).

According to an embodiment of the disclosure, an imaging device (e.g., the imaging device 400, 500, 600, 700, 800, 900, or 1000 in FIG. 5, FIG. 9, FIG. 13, FIG. 17, FIG. 21, FIG. 25, and/or FIG. 29) and/or an electronic device (e.g., the electronic device 101, 102, 104, or 300 in FIG. 1 or FIG. 3) including the same may include an image sensor (e.g., the image sensor I or 230 in FIG. 2, FIG. 5, FIG. 9, FIG. 13, FIG. 17, FIG. 21, FIG. 25, and/or FIG. 29), and a lens assembly (e.g., the lens assembly LA in FIG. 5, FIG. 9, FIG. 13, FIG. 17, FIG. 21, FIG. 25, and/or FIG. 29) including at least seven lenses (e.g., the lens(es) L1, L2, L3, L4, L5, L6, and L7 in FIG. 5, FIG. 9, FIG. 13, FIG. 17, FIG. 21, FIG. 25, and/or FIG. 29) aligned along an optical axis (e.g., the optical axis O in FIG. 5, FIG. 9, FIG. 13, FIG. 17, FIG. 21, FIG. 25, and/or FIG. 29) and configured to focus or guide light incident from an outside of the imaging device to the image sensor. In an embodiment, the at least seven lenses may include a first lens (e.g., the first lens L1 in FIG. 5, FIG. 9, FIG. 13, FIG. 17, FIG. 21, FIG. 25, and/or FIG. 29) disposed farthest from the image sensor and having a negative refractive power, a second lens (e.g., the second lens L2 in FIG. 5, FIG. 9, FIG. 13, FIG. 17, FIG. 21, FIG. 25, and/or FIG. 29) disposed between the first lens and the image sensor and having a positive refractive power, a third lens (e.g., the third lens L3 in FIG. 5, FIG. 9, FIG. 13, FIG. 17, FIG. 21, FIG. 25, and/or FIG. 29) disposed between the second lens and the image sensor and having a positive or negative refractive power, a fourth lens (e.g., the fourth lens L4 in FIG. 5, FIG. 9, FIG. 13, FIG. 17, FIG. 21, FIG. 25, and/or FIG. 29) disposed between the third lens and the image sensor and having a negative refractive power, a fifth lens (e.g., the fifth lens L5 in FIG. 5, FIG. 9, FIG. 13, FIG. 17, FIG. 21, FIG. 25, and/or FIG. 29) disposed between the fourth lens and the image sensor and having a positive or negative refractive power, a sixth lens (e.g., the sixth lens L6 in FIG. 5, FIG. 9, FIG. 13, FIG. 17, FIG. 21, FIG. 25, and/or FIG. 29) disposed between the fifth lens and the image sensor and having a positive refractive power, and a seventh lens (e.g., the seventh lens L7 in FIG. 5, FIG. 9, FIG. 13, FIG. 17, FIG. 21, FIG. 25, and/or FIG. 29) disposed between the sixth lens and the image sensor and having a negative refractive power. In an embodiment, the lens assembly may satisfy [Conditional Expression 1; 1.5 < f1/f7 < 2.5] where 'f1' may be a focal length of the first lens, and 'f7' may be a focal length of the seventh lens.

According to an embodiment, a sensor-side surface of the first lens may be concave, an object-side surface of the second lens may be convex, a sensor-side surface of the fourth lens may be concave, a sensor-side surface of the fifth lens may be convex, and a sensor-side surface of the seventh lens may be concave.

According to an embodiment, the lens assembly may satisfy [Conditional Expression 2; 1.5 < (R6-R7)/(R6+R7) < 3.5] where 'R6' may be a radius of curvature of an object-side surface of the third lens, and 'R7' may be a radius of curvature of a sensor-side surface of the third lens.)

According to an embodiment, the lens assembly may satisfy [Conditional Expression 3; 0.8 < |f4/f5| < 2.0] where 'f4' may be a focal length of the fourth lens, and 'f5' may be a focal length of the fifth lens.

According to an embodiment, at least one of the second lens, the third lens, the fifth lens, or the sixth lens may be a glass lens.

According to an embodiment, at least one of the second lens, the third lens, the fifth lens, or the sixth lens may be a glass lens including an aspheric surface.

According to an embodiment, at least one of the first lens, the fourth lens, or the seventh lens may be a plastic lens.

According to an embodiment, the second lens may be a glass lens including an aspheric surface.

According to an embodiment, the third lens may be a glass lens including an aspheric surface.

According to an embodiment, the third lens may have a positive refractive power.

According to an embodiment, the lens assembly may have an FOV of 110 degrees or more and 130 degrees or less.

According to an embodiment, the imaging device and/or the electronic device including the same may further include a stop (e.g., the stop in FIG. 5, FIG. 9, FIG. 13, FIG. 17, FIG. 21, FIG. 25, and/or FIG. 29) disposed between the second lens and the third lens.

According to an embodiment of the disclosure, an electronic device (e.g., the electronic device 101, 102, 104, or 300 in FIG. 1 or FIG. 3) may include the above-described imaging device (e.g., the imaging device 400, 500, 600, 700, 800, 900, or 1000 in FIG. 5, FIG. 9, FIG. 13, FIG. 17, FIG. 21, FIG. 25, and/or FIG. 29), at least one processor (e.g., the processor 120 in FIG. 1), and memory (e.g., the memory 130 in FIG. 1). According to an embodiment, the memory may store instructions that, when executed by the at least one processor, cause the electronic device to acquire an object image using the imaging device.

According to an embodiment of the disclosure, an electronic device (e.g., the electronic device 101, 102, 104, or 300 in FIG. 1 or FIG. 3) may include an imaging device (e.g., the imaging device 400, 500, 600, 700, 800, 900, or 1000 in FIG. 5, FIG. 9, FIG. 13, FIG. 17, FIG. 21, FIG. 25, and/or FIG. 29), at least one processor (e.g., the processor 120 in FIG. 1), and memory (e.g., the memory 130 in FIG. 1) storing instructions that, when executed by the at least one processor, cause the electronic device to acquire an object image using the imaging device. According to an embodiment, the imaging device may include an image sensor (e.g., the image sensor I or 230 in FIG. 2, FIG. 5, FIG. 9, FIG. 13, FIG. 17, FIG. 21, FIG. 25, and/or FIG. 29), and a lens assembly (e.g., the lens assembly LA in FIG. 5, FIG. 9, FIG. 13, FIG. 17, FIG. 21, FIG. 25, and/or FIG. 29) including at least seven lenses (e.g., the lens(es) L1, L2, L3, L4, L5, L6, and L7 in FIG. 5, FIG. 9, FIG. 13, FIG. 17, FIG. 21, FIG. 25, and/or FIG. 29) aligned along an optical axis (e.g., the optical axis O in FIG. 5, FIG. 9, FIG. 13, FIG. 17, FIG. 21, FIG. 25, and/or FIG. 29), wherein the at least seven lenses include at least one glass lens including an aspheric surface with a positive refractive power between a first lens (e.g., the first lens L1 in FIG. 5, FIG. 9, FIG. 13, FIG. 17, FIG. 21, FIG. 25, and/or FIG. 29) disposed farthest from the image sensor and an n^{th} lens (e.g., the seventh lens L7 in FIG. 5, FIG. 9, FIG. 13, FIG. 17, FIG. 21, FIG. 25, and/or FIG. 29) closest to the image sensor. In an embodiment, the lens assembly may be configured to focus or guide light incident from an outside of the imaging device to the image sensor. In an embodiment, the lens assembly may satisfy [Conditional Expression 4; 1.5 < f1/fn < 2.5] where 'f1' may be a focal length of the first lens, and 'fn' may be a focal length of the n^{th} lens.

According to an embodiment, the at least seven lenses may include the first lens having a negative refractive power, a second lens (e.g., the second lens L2 in FIG. 5, FIG. 9, FIG. 13, FIG. 17, FIG. 21, FIG. 25, and/or FIG. 29) disposed between the first lens and the image sensor and having a positive refractive power, a third lens (e.g., the third lens L3 in FIG. 5, FIG. 9, FIG. 13, FIG. 17, FIG. 21, FIG. 25, and/or FIG. 29) disposed between the second lens and the image sensor and having a positive or negative refractive power, a fourth lens (e.g., the fourth lens L4 in FIG. 5, FIG. 9, FIG. 13, FIG. 17, FIG. 21, FIG. 25, and/or FIG. 29) disposed between the third lens and the image sensor and having a negative refractive power, a fifth lens (e.g., the fifth lens L5 in FIG. 5, FIG. 9, FIG. 13, FIG. 17, FIG. 21, FIG. 25, and/or FIG. 29) disposed between the fourth lens and the image sensor and having a positive or negative refractive power, a sixth lens (e.g., the sixth lens L6 in FIG. 5, FIG. 9, FIG. 13, FIG. 17, FIG. 21, FIG. 25, and/or FIG. 29) disposed between the fifth lens and the image sensor and having a positive refractive power, and the n^{th} lens disposed between the sixth lens and the image sensor and having a negative refractive power.

According to an embodiment, the lens assembly may satisfy [Conditional Expression 2; 1.5 < (R6-R7)/(R6+R7) < 3.5] where 'R6' may be a radius of curvature of an object-side surface of the third lens, and 'R7' may be a radius of curvature of a sensor-side surface of the third lens.)

According to an embodiment, at least one of the second lens, the third lens, the fifth lens, or the sixth lens may be a glass lens including an aspheric surface while having a positive refractive power.

According to an embodiment, a sensor-side surface of the first lens may be concave, an object-side surface of the second lens may be convex, a sensor-side surface of the fourth lens may be concave, a sensor-side surface of the fifth lens may be convex, and a sensor-side surface of the n^{th} lens may be concave.

According to an embodiment, the lens assembly may satisfy [Conditional Expression 3; 0.8 < |f4/f5| < 2.0] where 'f4' may be a focal length of the fourth lens, and 'f5' may be a focal length of the fifth lens.

According to an embodiment, the lens assembly may have an FOV of 110 degrees or more and 130 degrees or less.

Although the disclosure has been illustrated and described with respect to an embodiment, it should be understood that the embodiment is intended to be illustrative rather than limiting of the disclosure. It will be apparent to those skilled in the art that various changes in form and details may be made without departing from the overall scope of the disclosure, including the appended claims and their equivalents.

## Claims

1. An imaging device (400; 500; 600; 700; 800; 900; 1000) comprising:
an image sensor (I; 230); and
a lens assembly (LA) including at least seven lenses (L1, L2, L3, L4, L5, L6, L7) aligned along an optical axis (O) and configured to focus or guide light incident from an outside of the imaging device to the image sensor,
wherein the at least seven lenses include,
a first lens (L1) disposed farthest from the image sensor and having a negative refractive power;
a second lens (L2) disposed between the first lens and the image sensor and having a positive refractive power;
a third lens (L3) disposed between the second lens and the image sensor and having a positive or negative refractive power;
a fourth lens (L4) disposed between the third lens and the image sensor and having a negative refractive power;
a fifth lens (L5) disposed between the fourth lens and the image sensor and having a positive or negative refractive power;
a sixth lens (L6) disposed between the fifth lens and the image sensor and having a positive refractive power; and
a seventh lens (L7) disposed between the sixth lens and the image sensor and having a negative refractive power, and
wherein the lens assembly satisfies the following [Conditional Expression 1], [Conditional Expression 1] $1.5 < f 1 / f 7 < 2.5$
(where 'f1' is a focal length of the first lens, and 'f7' is a focal length of the seventh lens.)

2. The imaging device of claim 1, wherein a sensor-side surface of the first lens is concave, an object-side surface of the second lens is convex, a sensor-side surface of the fourth lens is concave, a sensor-side surface of the fifth lens is convex, and a sensor-side surface of the seventh lens is concave.

3. The imaging device of claim 1 or 2, wherein the lens assembly satisfies the following [Conditional Expression 2], [Conditional Expression 2] $1.5 < \left(R6-R7\right) / \left(R6+R7\right) < 3.5$ (where 'R6' is a radius of curvature of an object-side surface of the third lens, and 'R7' is a radius of curvature of a sensor-side surface of the third lens.)

4. The imaging device of any one of claims 1 to 3, wherein the lens assembly satisfies the following [Conditional Expression 3], [Conditional Expression 3] $0.8 < \left|f4/f5\right| < 2.0$ (where 'f4' is a focal length of the fourth lens, and 'f5' is a focal length of the fifth lens.)

5. The imaging device of any one of claims 1 to 4, wherein at least one of the second lens, the third lens, the fifth lens, or the sixth lens is a glass lens.

6. The imaging device of any one of claims 1 to 5, wherein at least one of the second lens, the third lens, the fifth lens, or the sixth lens is a glass lens including an aspheric surface.

7. The imaging device of any one of claims 1 to 6, wherein at least one of the first lens, the fourth lens, or the seventh lens is a plastic lens.

8. The imaging device of any one of claims 1 to 7, wherein the second lens is a glass lens including an aspheric surface.

9. The imaging device of any one of claims 1 to 8, wherein the third lens is a glass lens including an aspheric surface.

10. The imaging device of claim 9, wherein the third lens has a positive refractive power.

11. The imaging device of any one of claims 1 to 10, wherein the lens assembly has a field of view of 110 degrees or more and 130 degrees or less.

12. The imaging device of any one of claims 1 to 11, further comprising a stop disposed between the second lens and the third lens.

13. An electronic device (101; 102; 104; 300) comprising:
the imaging device (400; 500; 600; 700; 800; 900; 1000) of any one of claims 1 to 11;
at least one processor (120); and
memory (120) storing instructions that, when executed by the at least one processor, cause the electronic device to acquire an object image using the imaging device.
